# EUROPÄISCHE PATENTSCHRIFT

(11) **EP 3 768 635 B1**
(45) Veröffentlichungstag und Bekanntmachung des Hinweises auf die Patenterteilung: **14.06.2023**
(21) Anmeldenummer: 19712748.3
(22) Anmeldetag: 19.03.2019
(51) Int. Cl.: C01B 11/02, B01J 19/24, B01D 53/14

(54) **VERFAHREN UND VORRICHTUNG ZUM HERSTELLEN EINER CHLORDIOXID ENTHALTENDEN WÄSSRIGEN LÖSUNG**
PROCESS AND APPARATUS FOR PRODUCING AN AQUEOUS SOLUTION CONTAINING CHLORINE DIOXIDE
PROCÉDÉ ET DISPOSITIF DE PRÉPARATION D'UNE SOLUTION AQUEUSE CONTENANT DU DIOXYDE DE CHLORE

(30) Priorität: 23.03.2018 DE 102018107018
(43) Veröffentlichungstag der Anmeldung: 27.01.2021
(73) Patentinhaber: Küke Verwaltungs GmbH & Co. KG, 30900 Wedemark (DE)
(72) Erfinder: Küke, Fritz, 30916 Isernhagen (DE)
(74) Vertreter: Eisenführ Speiser
(86) Internationale Anmeldenummer: PCT/EP2019/056892
(87) Internationale Veröffentlichungsnummer: WO 2019/180049

(56) Entgegenhaltungen:
- GB-A- 760 303
- US-A- 3 854 900
- US-A- 3 854 901
- US-A- 5 154 910

## Beschreibung

Die vorliegende Erfindung betrifft ein Verfahren zum Herstellen einer Chlordioxid enthaltenden wässrigen Lösung aus gasförmigem Chlordioxid und aus einer wässrigen Phase. Die Erfindung betrifft zudem eine Vorrichtung zur Durchführung des erfindungsgemäßen Verfahrens. Die Erfindung betrifft schließlich auch die Verwendung einer erfindungsgemäßen Vorrichtung zur Durchführung eines erfindungsgemäßen Verfahrens. Nachfolgend gelten sämtliche Ausführungen zum erfindungsgemäßen Verfahren entsprechend auch für die erfindungsgemäße Vorrichtung und die erfindungsgemäße Verwendung, und umgekehrt, soweit nicht im Einzelfall etwas anderes angegeben ist.

Die Erfindung betrifft das technische Gebiet der Herstellung von Chlordioxid enthaltenden wässrigen Lösungen und der Reinigung solcher wässrigen Chlordioxid-Lösungen.

Chlordioxid ist ein Gas, welches sich gut aus wässrigen Lösungen abtrennen, beispielsweise ausstrippen lässt, beispielsweise aus solchen wässrigen Lösungen, in denen es durch eines der verschiedene Syntheseverfahren hergestellt wurde, die der Fachmann im vorliegenden technischen Gebiet üblicherweise anwendet.

Die Überführung von Chlordioxidgas aus beispielsweise einer wässrigen (Ausgangs-)Lösung und das Auffangen des überführten Chlordioxidgases in einem flüssigen Medium (beispielsweise einer wässrigen Phase), das mit Chlordioxid nicht bzw. nicht in signifikantem Umfang reagiert, erscheint vorteilhaft, um Chlordioxid von Begleitstoffen abzutrennen, welche nicht flüchtig sind und daher in der wässrigen (Ausgangs-)Lösung, z.B. einer Reaktionslösung) verbleiben. Auf diese Weise kann das Chlordioxid von diesen Begleitstoffen befreit und somit gereinigt werden.

In W.J. MASSCHELEIN, RIP G. RICE: "Chlorine Dioxide, Chemistry and environmental impact of4. oxychlorine compounds", 1979, ANN ARBORSCIENCE, Seite 10-11; S. 125-126 wird beschrieben, dass in Laboratorien Chlordioxid gereinigt wird durch Ausgasen des Chlordioxids aus wässrigen Lösungen, indem man ein Gas durch diese Lösungen durchleitet oder das Chlordioxidgas durch Anlegen eines Vakuums aus der Lösung entfernt. Das Chlordioxidgas, welches z.B. mit Chlor vergesellschaftet sein kann, wird im Anschluss durch einen Absorberturm geführt, der mit Arsenit oder mit festem oder konzentriertem Natriumchlorit gefüllt sein kann.

Auf Seite 126 wird ein Beispiel einer Erzeugungsanlage unter Nutzung der Abtrennung von gasförmigem Chlordioxid beschrieben. Hierbei wird Natriumchloritlösung mit Salzsäure in einem Reaktionsbereich (reaction zone) innerhalb von 1-2 Minuten zu Chlordioxid umgesetzt. Eine Wasserstrahlpumpe (ejector) überführt Chlordioxidgas in ein frisches Feed- Wasser (feed water), welches im Anschluss für die jeweilige Anwendung benutzt werden kann.

DE 10 2010 011 699 A1 offenbart ein Verfahren und eine Vorrichtung zur Erzeugung einer Chlordioxid-Lösung. Chlordioxid wird durch Umsetzung von Chlorit mit Säure in einem Reaktionsbereich erzeugt und als gasförmiges Chlordioxid in einen separaten Behälter überführt. Der Einsatz von Wasserstrahlpumpen wird offenbart, als weiteres Mittel zur Überführung des Chlordioxids aus der Reaktionslösung wird ein Gasstrom offenbart, der durch die Reaktionslösung geleitet wird und dabei das Chlordioxid mitnimmt. Das Gas kann dabei Umgebungsluft sein, aber auch ein anderes Gas wie Kohlendioxid, Stickstoff oder sonstige chlordioxidstabile Gase.

EP 2 662 328 A1 offenbart ein Verfahren und eine Vorrichtung zur Erzeugung von Chlordioxid. Es wird offenbart, dass Chlorit mit Säure in einem Reaktor in wässriger Lösung umgesetzt und das gebildete gasförmige Chlordioxid in einen separaten Behälter überführt wird. Der Reaktor ist durch mindestens eine aus einem porösen Material ausgebildete Trennwand in mindestens zwei Reaktorkammern zur Umsetzung von Chlorit mit Säure unterteilt. In einer letzten Reaktorkammer wird Gas zugeführt und in der ersten Reaktorkammer wird das gebildete gasförmige Chlordioxid in einem Gemisch mit dem zugeführten Gas entnommen und in frisches Wasser überführt. In dem offenbarten Verfahren kann eine Wasserstrahlpumpe als Vakuumpumpe eingesetzt werden. Das gebildete, gasförmige Chlordioxid kann im Antriebswasser der Wasserstrahlpumpe gelöst werden. Beispiel 1 des Dokuments EP 2 662 328 A1 offenbart, welche Konzentrationen an Chlordioxid bei spezifischen Verfahrensgestaltungen erhalten werden.

DE 843 999 vom 14. Juli 1952 offenbart ein Verfahren zur Herstellung von Chlordioxid. Alkali- oder Erdalkalichlorit wird in Gegenwart von Wasser mit Alkali- oder Erdalkalipersulfat unter Durchleiten eines Inertgases bei pH-Werten von ungefähr 3 bis 11 und bei Temperaturen von vorzugsweise 20° C bis 65° C zur Reaktion gebracht und das Gasgemisch durch einen Absorptionsturm geleitet.

Das Dokument "Herstellung von reinem Chlordioxid im Laboratorium", UMWELT UND DEGUSSA, DEUTSCHLAND, Produkte, Verfahren und Methoden - 1991, Seiten 1-4 offenbart die Erzeugung von Chlordioxid durch Umsetzung von Natriumchlorit (NaClO₂) mit Natriumperoxodisulfat (Na₂S₂O₈). Mit einem bezogen auf Natriumperoxodisulfat 25 %igen Überschuss, bezogen auf die stöchiometrisch erforderliche Menge, wird "über Nacht" eine ca. 3 g ClO₂/L enthaltende Chlordioxidstammlösung hergestellt. Gemäß Tabelle 1 weist die Chlordioxidsstammlösung bei einer Standzeit von 0 bis 77 Tagen einen pH-Wert von 3,40 bis 3,10 auf. Das Dokument offenbart, dass im Anschluss an die Herstellung mittels eines Stickstoffstroms das Chlordioxid aus einer Waschflasche ausgetrieben und in einer gekühlten Wasservorlage absorbiert werden kann, die sich in einer seriell zur Waschflasche mit der Chlordioxid-Lösung geschalteten Waschflasche befindet. Diese zur Absorption vorgesehene Waschflasche wird gekühlt. Hierbei können Konzentrationen bis zu 7g ClO₂/L hergestellt werden. Der Stickstoffstrom, der noch Anteile von Chlordioxid enthält, wird "über Dach" ins Freie geleitet oder das Chlordioxidgas wird mittels Durchleiten durch eine 10 - 20%ige Natronlauge vollständig absorbiert, sodass kein Chlordioxid nach draußen gelangt

Das Dokument White, G. C.; "Handbook of chlorination and alternative Disinfectants"; 4. Auflage, John Wiley & Sons, Inc., (1999), S. 1171 und 1172, offenbart Systeme zur Herstellung von Chlordioxid-Lösungen. Mittels eines Stickstoffstroms wird hergestelltes Chlordioxid aus einer Reaktionslösung ausgestrippt und in eine Wasservorlage eingeleitet, die gemäß Abbildung 12-9 gekühlt ist. Es soll darauf geachtet werden, dass Chlordioxid nicht aus der Vorlage (collection reservoir) ausgestrippt wird.

GB 760 303 A offenbart eine Vorrichtung zum Absorbieren einer gewünschten Komponente aus einem "fetten" Gas in einem Absorptionsschritt, Trennen eines in Bezug auf die gewünschte Komponente "mageren" Gases von dem Absorptionsschritt, Anreichern des "mageren" Gases und Zurückführen desselben in den Absorptionsschritt. GB 760 303 A offenbart zudem ein Verfahren zur Herstellung von Chlordioxidhydrat, unter anderem umfassend das Erzeugen von Chlordioxidgas in einer Erzeugungszone, das Mischen desselben mit einem Gas mit niedrigem Chlordioxidgehalt sowie das Leiten der resultierenden Gasmischung in einen Wasserkörper, der in einer Absorptionszone unter solchen Bedingungen gehalten wird, dass ein Teil des Chlordioxids absorbiert wird und Chlordioxidhydrat bildet.

US 3,854,901 A offenbart ein Verfahren zur Trennung gasförmiger Mischungen von Chlordioxid und Chlor.

US 2006/0022360 A1 offenbart einen Chlordioxidlösungsgenerator, umfassend (a) eine Chlordioxidgasquelle; (b) einen Absorptionskreislauf zum Lösen von Chlordioxid in einen Flüssigkeitsstrom; und (c) eine Gastransferanordnung, die zwischen der Chlordioxidgasquelle und dem Absorptionskreislauf angeordnet ist. US 2006/0022360 A1 offenbart zudem ein Verfahren zum Erzeugen einer Chlordioxidlösung, umfassend die Schritte (a) Bereitstellen einer Quelle von Chlordioxidgas; (b) Lösen von Chlordioxid in einen Flüssigkeitsstrom mittels eines Absorptionskreislaufs; (c) Zwischenschalten einer Gasumwälzpumpe zwischen die Chlordioxidgasquelle und den Absorptionskreislauf; (d) Zwischenschalten einer Auslassverteileranordnung zwischen die Gasumwälzpumpenauslassöffnung und den Absorptionskreislauf; und (e) Hemmen des Chlordioxid-Zerfalls in dem druckbeaufschlagten Chlordioxidgasstrom.

CN106553997A offenbart (gemäß seinem WPI-abstract) eine Chlordioxiderzeugungsanlage für den Einsatz in der Öl- und Gasförderung, unter anderem umfassend einen Sensor für Chlor. CN106553997A offenbart außerdem, dass die Konzentration an Chlordioxid gesteuert wird.

Der Wikipedia-Artikel "Chlordioxid" vom 14. November 2018 offenbart verschiedene Verfahren zur Herstellung von Chlordioxid, wie z.B. das Peroxodisulfat-Chlorit-, das Salzsäure-Chlorit- und das Chlor-Chlorit-Verfahren.

Wenngleich die vorstehend diskutierten Dokumente bereits durchaus praxistaugliche Verfahren und Vorrichtungen zum Herstellen einer Chlordioxid enthaltenden wässrigen Lösung offenbaren, und insbesondere einzelne dieser Dokumente auch Verfahren und Vorrichtungen, bei bzw. in denen gasförmiges Chlordioxid in eine wässrige Phase eingeleitet und dort teilweise absorbiert wird, sodass eine Chlordioxid enthaltende wässrige Lösung resultiert, sind die offenbarten technischen Lehren jedoch noch immer nicht vollständig zufriedenstellend. So wird es als nachteilig empfunden, dass die jeweils eingesetzten Trägergase (z.B. Luft, Kohlendioxid oder Stickstoff, welche nur in geringem Umfang in Wasser löslich sind), mit dem nicht in Wasser absorbierten Chlordioxid aus dem jeweiligen System wieder abgeführt werden müssen. Dies erfolgt gemäß dem Stand der Technik entweder in die Umwelt ("über Dach") oder indem der Trägerstrom mit dem darin enthaltenen Rest an Chlordioxidgas einer chemischen Nachbehandlung unterzogen wird, bei der der Trägerstrom beispielsweise in eine hoch alkalische Lösung eingeleitet wird, wo Chlordioxid zu Chlorit und Chlorat disproportioniert. Die vorgenannten Maßnahmen erscheinen ökologisch problematisch und zudem technisch ineffizient. Im Falle der Aufnahme des Chlordioxids in einen Absorptionsturm oder des Einkondensierens in das Wasser einer Wasserstrahlpumpe ist der resultierende Chlordioxid-Gehalt in der wässrigen Lösung im Übrigen abhängig vom Volumenstrom und der Temperatur des aufnehmenden Mediums. Die Sättigung einer aufnehmenden wässrigen Phase mit Chlordioxid ist bei den kurzen Kontaktzeiten, die mit den vorstehend beschriebenen technischen Verfahren verbunden sind, nicht möglich. Es werden somit, im Verhältnis zur Reaktionslösung, nur vergleichsweise niedrig konzentrierte Lösungen von Chlordioxid erzeugt, sodass in der Praxis zum Erreichen einer vorgegebenen Chlordioxid-Endkonzentration in einem zu behandelnden (insbesondere zu desinfizierenden) Systemvolumen entsprechend große Förderpumpen, etc. eingesetzt werden müssen.

Mit den in den vorstehend referierten Dokumenten offenbarten Verfahren und Vorrichtungen lassen sich höher konzentrierte Chlordioxid-Lösungen, für die in der Praxis ein hoher Bedarf besteht, nicht bzw. nicht ohne zusätzliche Schritte herstellen. Dies wird als nachteilig empfunden.

Es war deshalb eine primäre Aufgabe der vorliegenden Erfindung, ein Verfahren sowie eine entsprechende Vorrichtung anzugeben, mit dem bzw. mit der eine Chlordioxid enthaltende wässrige Lösung aus gasförmigem Chlordioxid und einer wässrigen Phase hergestellt werden kann, welche vergleichsweise hoch konzentriert ist.

Vorzugsweise sollten das anzugebende Verfahren und die anzugebende Vorrichtung dazu beitragen, dass Chlordioxid nicht in die Umwelt entweicht. Weiter vorzugsweise sollte das anzugebende Verfahren bzw. die anzugebende Vorrichtung dazu beitragen, dass Teilmengen des hergestellten Chlordioxids nicht zur Vermeidung ökologisch nachteiliger Wirkungen wieder zerstört werden müssen. Weitere Aufgaben ergeben sich aus dem nachfolgenden Text.

Gemäß einem ersten Aspekt der vorliegenden Erfindung werden einzelne oder sämtliche der vorstehend genannten Aufgaben durch ein Verfahren gelöst, wie es in den beigefügten Patentansprüchen definiert ist.

Gemäß einem weiteren Aspekt werden einzelne oder sämtliche der genannten Aufgaben durch eine Vorrichtung gelöst, wie sie in den beigefügten Ansprüchen definiert ist.

Zudem betrifft die vorliegende Erfindung auch eine entsprechende Verwendung einer erfindungsgemäßen Vorrichtung zur Durchführung eines erfindungsgemäßen Verfahrens.

Die Erfindung betrifft zunächst ein Verfahren zum Herstellen einer Chlordioxid enthaltenden wässrigen Lösung aus gasförmigem Chlordioxid und aus einer wässrigen Phase, z.B. durch Überführen (z.B. Einleiten) von gasförmigem Chlordioxid in eine wässrige Phase,
mit folgenden Schritten:
   (a) Herstellen einer gelöstes Chlordioxid und weitere gelöste Bestandteile umfassenden ersten wässrigen Lösung,
   (b) Überführen von gelöstem Chlordioxid aus der hergestellten ersten wässrigen Lösung in einen ersten Gasstrom, der ein Trägergas umfasst, so dass ein zweiter Gasstrom resultiert, der Trägergas umfasst und an gasförmigem Chlordioxid angereichert ist,
   (c) Überführen von gasförmigem Chlordioxid aus dem zweiten Gasstrom in eine wässrige Phase, wobei Chlordioxid unter Bildung der Chlordioxid enthaltenden wässrigen Lösung in der wässrigen Phase gelöst und ein dritter Gasstrom gebildet wird, der an Chlordioxid abgereichert ist,
   (d) Herstellen weiterer Mengen des ersten Gasstroms
      aus dem dritten Gasstrom
         oder
      aus einem Chlordioxid enthaltenden Anteil des dritten Gasstroms und hinzugefügten weiteren gasförmigen Verbindungen
und Wiederholen oder Fortsetzen der vorstehenden Verfahrensschritte (b) und (c), so dass weitere Mengen an Chlordioxid in der wässrigen Phase gelöst werden,
wobei vorzugsweise
das Herstellen einer gelöstes Chlordioxid und weitere gelöste Bestandteile umfassenden ersten wässrigen Lösung in Schritt (a) nach einem Verfahren erfolgt, das ausgewählt ist aus der Gruppe bestehend aus:
   - Säure-Chlorit-Verfahren,
   - Salzsäure-Chlorit-Verfahren,
   - Säure-Hypochlorit-Chlorit-Verfahren,
   - Peroxodisulfat-Chlorit-Verfahren,
   - Peroxodisulfat-Peroxomonosulfat-Chlorit-Verfahren,
   - Chlorid-Elektrolyse- Verfahren,
   - Chlorit-Elektrolyse-Verfahren
und wobei vorzugsweise
die erste wässrige Lösung in Schritt (b) eine Temperatur T₁ besitzt und die wässrige Phase in Schritt (c) eine Temperatur T₂ besitzt, wobei T₂ kleiner ist als T₁.

Weitere bevorzugte Ausgestaltungen sind in den Ansprüchen definiert.

Besonders relevant für das erfindungsgemäße Verfahren ist es, dass gemäß Schritt (d) weitere Mengen des ersten Gasstroms (das ist der Gasstrom, in den hinein gemäß Schritt (b) gelöstes Chlordioxid aus der ersten wässrigen Lösung überführt wird) hergestellt werden, und zwar aus dem dritten Gasstrom (das ist der Gasstrom, der in Schritt (c) gebildet wird und der an Chlordioxid abgereichert ist) oder aus einem Chlordioxid enthaltenden Anteil dieses dritten Gasstroms und hinzugefügten weiteren gasförmigen Verbindungen. Der dritte Gasstrom wird somit nicht bzw. zumindest nicht vollständig in die Umwelt geleitet, sondern stattdessen im erfindungsgemäßen Verfahren vorteilhaft als Wertstoffstrom genutzt. Dementsprechend werden die Verfahrensschritte (b) und (c) nach Durchführung des Schrittes (d), das heißt nach dem Herstellen weiterer Mengen des ersten Gasstromes, wiederholt oder fortgesetzt, sodass weitere Mengen an Chlordioxid in der wässrigen Phase gelöst werden (vgl. die Definition zu Schritt (c)). Insbesondere wird Chlordioxid aus dem dritten Gasstrom (das ist Chlordioxid, welches in Schritt (c) des erfindungsgemäßen Verfahrens nicht in die wässrige Phase aufgenommen wurde und somit nicht unmittelbar Bestandteil der Chlordioxid enthaltenden wässrigen Lösung geworden ist) nicht verworfen, sondern vorteilhaft genutzt, indem es in die weiteren Mengen des ersten Gasstroms integriert wird und somit durch Wiederholen bzw. Fortsetzen der Schritte (b) und (c) dazu beiträgt, dass weitere Mengen an Chlordioxid in der wässrigen Phase gemäß Schritt (c) gelöst werden.

Im Vergleich mit dem Stand der Technik kann somit erfindungsgemäß mit einer gleichen Menge an Chlordioxid eine höher konzentrierte wässrige Lösung erhalten werden (in Schritt (c) des erfindungsgemäßen Verfahrens) bzw. kann mit einer geringeren Menge an hergestelltem Chlordioxid eine gleichhohe Konzentration an Chlordioxid in wässriger Lösung erhalten werden. Das erfindungsgemäße Verfahren ist somit sowohl unter ökologischen als auch unter ökonomischen Gesichtspunkten vorteilhaft.

Das Herstellen einer gelöstes Chlordioxid und weitere gelöste Bestandteile umfassenden ersten wässrigen Lösung in Schritt (a) eines erfindungsgemäßen Verfahrens erfolgt vorzugsweise nach einem Verfahren, das ausgewählt ist aus der Gruppe bestehend aus
- Säure-Chlorit-Verfahren,
- Salzsäure-Chlorit-Verfahren (vgl. z.B. DIN EN 12671),
- Säure-Hypochlorit-Chlorit-Verfahren (vgl. z.B. DIN EN 12671),
- Peroxodisulfat-Chlorit-Verfahren (vgl.z.B. DIN EN 12671),
- Peroxodisulfat-Peroxomonosulfat-Chlorit-Verfahren,
- Chlorid-Elektrolyse-Verfahren (vgl. z.B. WO 2015/131874 A2),
- Chlorit-Elektrolyse-Verfahren (vgl. z.B. DE 10 2013 010 950 A1).

Hinsichtlich der vorstehend verwendeten Bezeichnungen zu den Herstellungsverfahren vgl. unter anderem DIN EN 12671 :2016-09.

Obwohl sämtliche der vorstehend genannten Verfahren zum Herstellen einer gelöstes Chlordioxid und weitere gelöste Bestandteile umfassenden ersten wässrigen Lösung geeignet sind, sind die Verfahren Säure-Chlorit-Verfahren, Salzsäure-Chlorit-Verfahren, Säure-Hypochlorit-Chlorit-Verfahren, Peroxodisulfat-Chlorit-Verfahren und Peroxodisulfat-Peroxomonosulfat-Chlorit-Verfahren gegenüber den Elektrolyse-Verfahren (Chlorid-Elektrolyse-Verfahren und Chlorit-Elektrolyse-Verfahren) bevorzugt. Der Grund dafür ist, dass mit der Durchführung der Elektrolyse-Verfahren in manchen Fällen ein oder mehr der folgenden Nachteile verbunden sind:
- Die Durchführung der Elektrolyse-Verfahren erfordert einen (vergleichsweise) höheren apparativen Aufwand.
- Der in den Elektrolyse-Verfahren auf der Kathodenseite entstehende Wasserstoff muss sicher entsorgt werden, um eine Bildung von Knallgas (Explosionsgefahr) zu verhindern.
- Damit die Elektrolyse (und damit die Chlordioxid-Herstellung) nicht zum Erliegen kommt, müssen die Elektrolyse-Verfahren (i) mit enthärtetem Wasser betrieben oder (ii) die Kathoden regelmäßig von Kalk- (CaCO₃) und ähnlichen (auf Härtebildner zurückzuführende) Ablagerungen befreit werden.

Im erfindungsgemäßen Verfahren enthält die wässrige Lösung gemäß Schritt (a) weitere gelöste Bestandteile neben dem gelösten Chlordioxid. Vorzugsweise sind ein, zwei oder mehr der weiteren gelösten Bestandteile der in Schritt (a) hergestellten ersten wässrigen Lösung ausgewählt aus der Gruppe bestehend aus Säuren und Säureanhydriden, peroxogruppenhaltige Verbindungen und chlorhaltige Verbindungen,
wobei die peroxogruppenhaltigen Verbindungen vorzugsweise ausgewählt sind aus der Gruppe bestehend aus
   Peroxodisulfat, bevorzugt Natriumperoxodisulfat, und
   Peroxomonosulfat, bevorzugt Kaliumperoxomonosulfat,
      und/oder
wobei die chlorhaltigen Verbindungen vorzugsweise ausgewählt sind aus der Gruppe bestehend aus
   molekularem Chlor, Chlorid, Hypochlorit, Chlorit und Chlorat
   und/oder
wobei die Säuren und Säureanhydride vorzugsweise ausgewählt sind aus der Gruppe bestehend aus
   Mineralsäuren, bevorzugt ausgewählt aus der Gruppe bestehend aus Schwefelsäure, Salzsäure, Phosphorsäure und Salpetersäure
      und
   organische Säuren und organische Anhydride, bevorzugt ausgewählt aus der Gruppe bestehend aus Essigsäure, Essigsäureanhydrid und Propionsäure.

Es versteht sich, dass die besagten weiteren gelösten Bestandteile abhängig sind von den eingesetzten Verfahren zum Herstellen der gelöstes Chlordioxid und weitere gelöste Bestandteile umfassenden ersten wässrigen Lösung. Die Vorteile des erfindungsgemäßen Verfahrens sind jedoch von der Auswahl dieses Herstellungsverfahrens für die erste wässrige Lösung und somit von der Anwesenheit bestimmter gelöster Bestandteile weitgehend unabhängig; auf die vorstehenden Ausführungen sei insoweit verwiesen.

In einem erfindungsgemäßen Verfahren ist das in Schritt (b) eingesetzte Trägergas vorzugsweise gegenüber Chlordioxid inert. Vorzugsweise ist das Trägergas ausgewählt aus der Gruppe bestehend aus Luft, Stickstoff, Kohlendioxid, Sauerstoff, Edelgase und deren Mischungen. Selbstverständlich kann der Fachmann abhängig von den Erfordernissen des Einzelfalls auch andere als die hier genannten bevorzugten Trägergase einsetzen. Es versteht sich, dass in erfindungsgemäßen Verfahren das Trägergas vorzugsweise so ausgewählt wird, dass es in Wasser schlechter löslich ist als Chlordioxid, und dies vorzugsweise sowohl bei der Temperatur der ersten wässrigen Lösung als auch bei der Temperatur der wässrigen Phase gemäß Schritt (c).

Es wurde bereits erwähnt, dass aufgrund der erfindungsgemäßen Maßnahme gemäß Schritt (d) des erfindungsgemäßen Verfahrens Chlordioxid aus dem dritten Gasstrom zum Herstellen weiterer Mengen des ersten Gasstroms eingesetzt wird. Es ist dementsprechend bevorzugt, dass der in Schritt (b) des erfindungsgemäßen Verfahrens eingesetzte erste Gasstrom zumindest zeitweilig, vorzugsweise zumindest nach Schritt (d), einen Anteil an Chlordioxid enthält. Selbstverständlich kann der in Schritt (b) eingesetzte erste Gasstrom auch bereits anfänglich, das heißt bevor überhaupt gemäß Schritt (d) weitere Mengen des ersten Gasstroms hergestellt werden, einen Anteil an Chlordioxid enthalten. Üblicherweise wird jedoch anfänglich ein erster Gasstrom eingesetzt, der noch frei ist von Chlordioxid; nach Durchführen des Schrittes (d) und beim Wiederholen bzw. Fortsetzen der Verfahrensschritte (b) und (c) wird dann ein erster Gasstrom eingesetzt, der einen Anteil an Chlordioxid enthält.

Die Zusammensetzung des ersten Gasstroms verändert sich bei dieser üblichen Vorgehensweise somit; anfänglich ist der Anteil an Chlordioxid im ersten Gasstrom sehr gering (oder es ist überhaupt kein Chlordioxid vorhanden), später, nachdem der dritte Gasstrom gebildet und der dritte Gasstrom bzw. Chlordioxid enthaltende Anteile des dritten Gasstroms genutzt wird, um weitere Mengen des ersten Gasstroms herzustellen (vgl. Schritt (d)) ist die Konzentration an Chlordioxid im ersten Gasstrom erhöht.

Erfindungsgemäß ist es vorteilhaft, wenn der erste Gasstrom zur Durchführung des Schrittes (b) in die gemäß Schritt (a) hergestellte erste wässrige Lösung eingeleitet wird, vorzugsweise fein verteilt (d. h. in fein verteilter Form) eingeleitet wird, wobei vorzugsweise die erste wässrige Lösung in Schritt (a) in einem ersten Behältnis hergestellt wird und der erste Gasstrom zur Durchführung des Schrittes (b) in die gemäß Schritt (a) hergestellte erste wässrige Lösung in dem ersten Behältnis eingeleitet wird. Vorzugsweise wird somit die erste wässrige Lösung in dem (ersten) Behältnis, in dem sie hergestellt wird, mit dem ersten Gasstrom behandelt, so dass gelöstes Chlordioxid in den ersten Gasstrom überführt wird, so dass der zweite Gasstrom resultiert.

Das Einleiten bzw. das Einleiten in fein verteilter Form erfolgt dabei vorzugsweise auf dem Fachmann bekannte Art und Weise, beispielsweise unter Verwendung eines Tauchrohrs, einer Gaslanze, einer Fritte oder dergleichen. Die genannten apparativen Elemente sind auch bevorzugte Bestandteile einer erfindungsgemäßen Vorrichtung, wie sie nachfolgend im Detail dargestellt ist.

Das Einleiten des ersten Gasstroms in die gemäß Schritt (a) hergestellte erste wässrige Lösung in fein verteilter Form ist für die Absorption von Chlordioxid im ersten Gasstrom vorteilhaft. Zur Beförderung der Absorption ist auch die Anwesenheit von Einbauten oder dergleichen in den zu verwendenden Apparaturen und Vorrichtungen vorteilhaft. Vgl. insoweit erneut die Ausführungen weiter unten zur erfindungsgemäßen Vorrichtung.

Sofern das Herstellen einer gelöstes Chlordioxid und weitere gelöste Bestandteile umfassenden ersten wässrigen Lösung in Schritt (a) nach einem Elektrolyse-Verfahren (Chlorid-Elektrolyse-Verfahren oder Chlorit-Elektrolyse-Verfahren) erfolgt, ist es vorteilhaft, wenn der erste Gasstrom zur Durchführung des Schrittes (b) vorzugsweise so in die gemäß Schritt (a) hergestellte erste wässrige Lösung eingeleitet wird, dass die Elektrode/n (vorzugsweise die Anode) nicht in Kontakt mit dem eingeleiteten Gas gelangt. Mit anderen Worten: es wird vorzugsweise vermieden, dass die (reaktive) Oberfläche der Anode durch Kontakt mit dem ersten Gasstrom zur Durchführung des Schrittes (b) verkleinert wird; ansonsten würde nämlich die Raum-Zeit-Ausbeute (bzw. die Flächen-Zeit-Ausbeute) an Chlordioxid während der Elektrolyse sinken.

In einem erfindungsgemäßen Verfahren wird vorzugsweise der in Schritt (b) resultierende zweite Gasstrom zur Durchführung des Schrittes (c) in die wässrige Phase eingeleitet, vorzugsweise fein verteilt eingeleitet, das heißt vorzugsweise in fein verteilter Form eingeleitet. Diese bevorzugte Maßnahme ist vorzugweise kombiniert mit der zuvor diskutierten Maßnahme, wonach der erste Gasstrom zur Durchführung des Schrittes (b) in die gemäß Schritt (a) hergestellte erste wässrige Lösung eingeleitet wird, vorzugsweise fein verteilt eingeleitet wird. Hinsichtlich der Einleitung bzw. fein verteilten Einleitung des in Schritt (b) resultierenden zweiten Gasstroms zur Durchführung des Schrittes (c) in die wässrige Phase, gelten die vorstehenden Anmerkungen zur Einleitung des ersten Gasstroms in die gemäß Schritt (a) hergestellte erste wässrige Lösung entsprechend, *mutatis mutandis.*

Der Fachmann wird Schritt (c) des erfindungsgemäßen Verfahrens vorzugsweise so ausgestalten, dass gasförmiges Chlordioxid aus dem zweiten Gasstrom möglichst effizient in die wässrige Phase überführt wird, sodass Chlordioxid unter Bildung der Chlordioxid enthaltenden wässrigen Lösung in möglichst großer Konzentration in der wässrigen Phase gelöst wird und ein dritter Gasstrom gebildet wird, der möglichst weitgehend an Chlordioxid abgereichert ist. Hierzu wird er die in der Praxis akzeptablen und möglichen Maßnahmen treffen, welche die Absorption von Chlordioxid in der wässrigen Phase befördern. Ein Einleiten des zweiten Gasstroms in die wässrige Phase in fein verteilter Form ist hierbei eine bevorzugte Maßnahme im Rahmen des Schrittes (c).

Es versteht sich, dass (i) die Löslichkeit von Chlordioxid in wässrigen Lösungen ebenso wie (ii) die Geschwindigkeit der Absorption von gasförmigem Chlordioxid in einer wässrigen Phase und (iii) die Geschwindigkeit der Desorption von Chlordioxid aus einer wässrigen Phase von der jeweils eingestellten Temperatur abhängt. Die Erfindung betrifft entsprechend insbesondere ein Verfahren, in dem die erste wässrige Lösung in Schritt (b) eine Temperatur T₁ besitzt und die wässrige Phase in Schritt (c) eine Temperatur T₂ besitzt, wobei T₂ kleiner ist als T₁. Dadurch, dass T₂ bei dieser bevorzugten Ausgestaltung kleiner ist als T₁, sind Bedingungen geschaffen, bei denen zumindest im Gleichgewicht die Chlordioxidkonzentration in der wässrigen Phase mit Temperatur T₂, das heißt in der gemäß Schritt (c) gebildeten Chlordioxid enthaltenden wässrigen Lösung, höher ist als in der ersten wässrigen Lösung mit Temperatur T₁, die noch weitere gelöste Bestandteile umfasst. Hierdurch wird die Abtrennung des Chlordioxids aus der ersten wässrigen Lösung (vgl. Schritt (b)) und die Aufnahme des Chlordioxids in die wässrige Phase (unter Bildung der Chlordioxid enthaltenden wässrigen Lösung gemäß Schritt (c)) besonders vollständig ablaufen.

Vorzugsweise liegt T₂ (das heißt die Temperatur der wässrigen Phase in Schritt (c) im Bereich von 0 °C bis 15 °C. in diesem Temperaturbereich lässt sich eine besonders große Menge an Chlordioxid in der wässrigen Phase lösen.

Vorzugsweise liegt die Temperatur T₁ (das ist die Temperatur der ersten wässrigen Lösung in Schritt (b)) im Bereich von 20 bis 40 °C; bei dieser Temperatur ist die Löslichkeit von Chlordioxid in der wässrigen Lösung vergleichsweise gering, sodass Chlordioxid besonders leicht aus der wässrigen Lösung herausgestrippt werden kann. Vorzugsweise ist die Differenz zwischen T₁ und T₂ größer als 10 K; sie liegt bevorzugt im Bereich zwischen 10 K und 40 K. Durch solche Temperaturdifferenzen lassen sich besonders effektiv hochkonzentrierte Chlordioxid enthaltende wässrige Lösungen herstellen. Zumindest im Gleichgewicht wird die Konzentration des Chlordioxids in der durch Schritt (c) gebildeten wässrigen Phase auch von der Temperatur in dieser wässrigen Phase und der Temperaturdifferenz im Vergleich mit der ersten wässrigen Lösung bestimmt.

Vorzugsweise wird in einem erfindungsgemäßen Verfahren vorbestimmt, welche Konzentration an Chlordioxid in der herzustellenden Chlordioxid enthaltenden wässrigen Lösung eingestellt werden soll, und dann wird die Temperatur T₂ so gewählt, dass die zu erreichende Chlordioxidkonzentration in der herzustellenden wässrigen Lösung bei der besagten Temperatur T₂ im Gleichgewicht vorliegt oder die im Gleichgewicht vorliegende Konzentration sogar höher ist als die zu erreichende Konzentration; im letztgenannten Fall wird dann das Verfahren abgebrochen, sobald die zu erreichende Konzentration eingestellt ist, das heißt vor Erreichen der Gleichgewichtskonzentration.

In manchen Fällen ist es vorteilhaft eine hergestellte Chlordioxid enthaltende wässrige Lösung durch Zugabe von Wasser auf eine reduzierte Chlordioxidkonzentration zu verdünnen; solche verdünnten Chlordioxid enthaltenden wässrigen Lösungen sind insbesondere bei niedrigen Temperaturen langzeitstabil.

Ein erfindungsgemäßes Verfahren ist bevorzugt, wobei in Schritt (c) die wässrige Phase ortsfest ist, vorzugsweise ortsfest in einem stationären Behältnis angeordnet ist, oder bewegt ist, vorzugsweise in einer Strahlpumpe als Treibmedium bewegt ist. Abhängig von den Erfordernissen des Einzelfalls kann es vorteilhaft sein, den zweiten Gasstrom bei Durchführung des Schrittes (c) in eine ortsfeste wässrige Phase einzuleiten, beispielsweise mittels eines Tauchrohrs oder dergleichen, oder die wässrige Phase in einem bewegten Zustand vorzusehen, beispielsweise als Treibmedium in einer Strahlpumpe, sodass der zweite Gasstrom mit der bewegten wässrigen Phase (beispielsweise dem Treibmedium der Strahlpumpe) kontaktiert und vom bewegten Medium aufgenommen wird. Wird die wässrige Phase bei Durchführung des Schrittes (c) als Treibmedium in einer Strahlpumpe eingesetzt, so ergibt sich eine Doppelfunktion, denn die Strahlpumpe kann gleichzeitig so als Vakuumpumpe eingesetzt werden, dass sie den Transport des zweiten Gasstroms bewirkt. Insoweit sei auf die Erläuterungen zur erfindungsgemäßen Vorrichtung und auf die Beispiele verwiesen.

In manchen Fällen liegt in der gemäß Schritt (a) hergestellten wässrigen Lösung, die gelöstes Chlordioxid enthält, auch gelöstes Chlor vor. Insbesondere in diesen Fällen wird in einem erfindungsgemäßen Verfahren in Schritt (b) auch Chlorgas aus der hergestellten ersten wässrigen Lösung in den ersten Gasstrom überführt, sodass der zweite Gasstrom auch an Chlorgas angereichert ist. Dies ist häufig nicht zu vermeiden, aber auch durchaus akzeptabel. Vorzugsweise wird jedoch das Verhältnis der Mengen von Chlorgas zu Chlordioxidgas und/oder die Menge an Chlorgas im zweiten Gasstrom vor Schritt (c) verringert, bevorzugt durch selektive chemische Umsetzung von Chlor. Eine entsprechende Vorrichtung zur Durchführung des erfindungsgemäßen Verfahrens enthält vorteilhafterweise eine Chloreliminierungseinheit, vgl. dazu die Ausführungen weiter unten. Vorzugsweise wird Chlorgas aus dem zweiten Gasstrom entfernt, indem man den zweiten Gasstrom mit Chloritsalz oder einer wässrigen Chlorit-Lösung kontaktiert. Hierbei bildet sich Chlordioxid sowie Chlorid. Chlor kann aber auch mit anderen Redoxsystemen, die selektiv mit Chlor und (zumindest vorzugsweise) nicht mit Chlordioxid reagieren, aus dem Gasstrom entfernt werden (z.B. mit dem in den Dokumenten aus dem Stand der Technik genannten Arsenit).

Eine entsprechende Maßnahme zur Verringerung der Menge an Chlorgas im zweiten Gasstrom vor Schritt (c) ist besonders bevorzugt, sofern das Herstellen einer gelöstes Chlordioxid und weitere gelöste Bestandteile umfassenden ersten wässrigen Lösung in Schritt (a) nach einem Verfahren erfolgt, das ausgewählt ist aus der Gruppe bestehend aus
- Salzsäure-Chlorit-Verfahren und
- Säure-Hypochlorit-Chlorit-Verfahren.

Insbesondere in diesen Verfahren entsteht Chlorgas als Nebenprodukt in signifikanter Menge.

Vorzugsweise wird das erfindungsgemäße Verfahren in einer verschließbaren (und im erfindungsgemäßen Betrieb verschlossenen) Vorrichtung durchgeführt. Bevorzugt ist dabei, dass kein gasförmiges Chlordioxid aus der Vorrichtung entweicht. Dies steht im Einklang mit den Zielen der vorliegenden Erfindung. Eine erfindungsgemäße Vorrichtung zur Durchführung des erfindungsgemäßen Verfahrens ist somit verschließbar, wir verweisen auf die entsprechenden Ausführungen weiter unten.

Vorzugsweise wird ein erfindungsgemäßes Verfahren zumindest solange fortgesetzt, bis
- das Verhältnis von Chlordioxidkonzentration in der ersten wässrigen Lösung zu Chlordioxidkonzentration in der in Schritt (c) gebildeten wässrigen Lösung einen vorbestimmten Wert erreicht hat
   und/oder
- die Chlordioxidkonzentration oder die Chlordioxidmenge in der in Schritt (c) gebildeten wässrigen Lösung einen vorbestimmten Wert erreicht hat.

In der Praxis wird der Fachmann vorzugsweise vor Beginn des erfindungsgemäßen Verfahrens vorbestimmen, welches Verhältnis von Chlordioxidkonzentration in der ersten wässrigen Lösung zur Chlordioxidkonzentration in der in Schritt (c) gebildeten wässrigen Lösung erreicht werden soll und/oder welche Chlordioxidkonzentration oder Chlordioxidmenge in der in Schritt (c) gebildeten wässrigen Lösung erreicht werden soll. Entsprechend wird dann das erfindungsgemäße Verfahren zumindest so lange fortgesetzt, bis einer der besagten vorbestimmten Werte oder bis beide vorbestimmte Werte erreicht sind. Erst dann wird in einem bevorzugten erfindungsgemäßen Verfahren die weitere Aufkonzentration von Chlordioxid in der hergestellten bzw. herzustellenden Chlordioxid enthaltenden wässrigen Lösung beendet. Wie erwähnt sind die Temperatur T₁ der ersten wässrigen Lösung in Schritt (b) sowie die Temperatur T₂ der wässrigen Phase in Schritt (c) besonders relevante Parameter, die der Fachmann in geeigneter Weise einstellen wird, damit er die vorbestimmten Werte erreicht.

In erfindungsgemäßen Verfahren werden die Nachteile der oben beschriebenen Verfahren des Standes der Technik unter anderem dadurch besonders vorteilhaft beseitigt, dass hergestelltes (z.B. in einem Reaktor hergestelltes) gelöstes Chlordioxid (vgl. Schritt (a)) mittels eines Trägergases, vorzugsweise mittels eines Trägergases, welches gegenüber Chlordioxid inert ist (vgl. Schritt (b) und die Angaben zu bevorzugten Trägergasen) in einen ersten Gasstrom überführt wird (also z. B. ausgestrippt wird) und dann in eine wässrige Phase überführt wird (vgl. Schritt (c)), wobei die wässrige Phase vorzugsweise eine Temperatur besitzt, die niedriger ist als die Temperatur der ersten wässrigen Lösung (vgl. die entsprechenden Ausführungen zu den Temperaturen T₁ und T₂). Das Trägergas gibt einen Teil des Chlordioxidgases an das Wasser dieser wässrigen Phase ab (vgl. Schritt (c)).

Vorzugsweise wird der chlordioxidhaltige dritte Gasstrom oder ein Chlordioxid enthaltender Anteil dieses dritten Gasstroms als Teil des ersten Gasstroms im Kreislauf wieder in die erste wässrige Lösung zurückgeleitet, um wieder Chlordioxid aufzunehmen; auf die Ausführungen zu entsprechend eingerichteten erfindungsgemäßen Vorrichtungen sei bereits verwiesen.

Mit Blick auf Schritt (a) des erfindungsgemäßen Verfahrens ist hervorzuheben, dass sich die erste wässrige Lösung mit dem darin gelösten Chlordioxid direkt in dem Reaktor befinden kann, in dem das Chlordioxid erzeugt wurde, sich aber andererseits z. B. auch in einem separaten Lagertank befinden kann, in den ein zuvor erzeugtes, Chlordioxid bzw. Chlordioxid enthaltendes Reaktionsgemisch überführt wurde. Das Chlordioxid wird dann in der zuvor beschriebenen Weise aus der ersten wässrigen Lösung in einen ersten Gasstrom überführt, das heißt z. B. ausgestrippt (vgl. Schritt (a)).

Wie bereits erwähnt, wird das erfindungsgemäße Verfahren in einer verschließbaren Vorrichtung so geführt, dass kein gasförmiges Chlordioxid aus der Vorrichtung entweicht. Vorzugsweise wird das Verfahren dabei in einer verschließbaren Vorrichtung so geführt, dass weder gasförmiges Chlordioxid noch Trägergas aus der Vorrichtung entweicht. Hinsichtlich des Entweichens von gasförmigem Chlordioxid und/oder Trägergas, wird das erfindungsgemäße Verfahren somit vorzugsweise in einem geschlossenen System durchgeführt. Im Unterschied zu Verfahren aus dem Stand der Technik wird Chlordioxid somit im bevorzugten erfindungsgemäßen Verfahren nicht (oder allenfalls in geringen Mengen) aus dem System entfernt, sondern vorzugsweise wird in einem erfindungsgemäßen Verfahren Chlordioxid vollständig oder zumindest im Wesentlichen vollständig durch eine (gegebenenfalls mehrstufige) Absorption in eine wässrige Phase überführt, sodass eine hochkonzentrierte wässrige Lösung resultiert.

Überraschenderweise hat sich gezeigt, dass sich insbesondere bei niedrigen Temperaturen T₂ in der wässrigen Phase in Schritt (c) und großen Temperaturdifferenzen zwischen T₂ und T₁ (zu bevorzugten Ausgestaltungen siehe oben) eine Chlordioxid enthaltende wässrige Lösung mit einer hohen Chlordioxidkonzentration erhalten lässt, die nicht zur Explosion neigt. Derartige Chlordioxid enthaltende wässrige Lösungen können dann unter Einsatz vergleichsweise kleiner Pumpen oder dergleichen eingesetzt werden, um große Volumina von zu behandelnden wässrigen Gemischen (Brauchwasser, aufzubereitendes Trinkwasser, Schwimmbadwasser oder dergleichen) zu behandeln. Eine nahezu vollständige Abreicherung der ersten wässrigen Lösung (z.B. eines entsprechenden Reaktionsgemisches) an Chlordioxid kann durch eine große Temperaturdifferenz (T₁-T₂) zwischen der wässrigen Lösung in Schritt (b) und der wässrigen Phase in Schritt (c) erreicht werden. Beispielsweise wird zu diesem Zweck ein Chlordioxidreaktor (ein Behältnis, in dem sich die erste wässrige Lösung durch Reaktion entsprechender Reaktanten bildet) auf eine bestimmte Temperatur erwärmt (auf eine Temperatur oberhalb der Umgebungstemperatur), während gleichzeitig die Temperatur in der wässrigen Phase gemäß Schritt (c) durch Kühlung auf einen niedrigen Wert eingestellt wird. Die Löslichkeit des Chlordioxidgases ist jeweils durch den Löslichkeitskoeffizienten bei einer bestimmten Temperatur bestimmt.

Ein erfindungsgemäßes Verfahren ist bevorzugt, wobei in der in Schritt (c) gebildeten Chlordioxid enthaltenden wässrigen Lösung die Chlordioxidkonzentration
- im Bereich von 5 bis 20 g/L liegt, bevorzugt im Bereich von 9 bis 20 g/L, besonders bevorzugt im Bereich von 12 bis 20 g/L, ganz besonders bevorzugt im Bereich von 15 bis 20 g/L,
   und/oder
- so eingestellt wird, dass die korrespondierende Konzentration im Gasraum bei der vorliegenden Temperatur gemäß DIN EN 12671 :2016-09 kleiner ist als 300 g/m³ und/oder kleiner ist als 10 Vol.-%.

In bevorzugten erfindungsgemäßen Verfahren werden somit in Schritt (c) gebildete Chlordioxid enthaltende wässrige Lösungen angestrebt, welche eine hohe Chlordioxidkonzentration aufweisen und trotzdem, aufgrund der niedrigen Temperatur (T₂) der Chlordioxid enthaltenden wässrigen Lösung, nicht zur Explosion neigen. Da die Höhe der noch zulässigen Chlordioxidkonzentration von der Temperatur der Chlordioxid enthaltenden wässrigen Lösung abhängt, ist die Einstellung niedriger Temperaturen für die hergestellten Chlordioxid enthaltenden wässrigen Lösungen bevorzugt. Insbesondere bevorzugt ist ein erfindungsgemäßes Verfahren, wobei die in Schritt (c) gebildete Chlordioxid enthaltende wässrige Lösung eine Temperatur im Bereich von 0 bis 10 °C und eine Chlordioxidkonzentration im Bereich von 15 bis 20 g/L aufweist.

Um sicherzustellen, dass die in Schritt (c) gebildete Chlordioxid enthaltende wässrige Lösung nicht zur Explosion neigt, ist es vorteilhaft, die Chlordioxidkonzentration der wässrigen Lösung so einzustellen, dass die korrespondierende Konzentration im Gasraum bei gegebener Temperatur unterhalb der Explosionsgrenze für Chlordioxid von 300 g/m³ bzw. 10 Vol .-% liegt (vgl. DIN EN 12671 :2016-09).

Ist eine sehr weitgehende Abreicherung von Chlordioxid aus der ersten wässrigen Lösung (z.B. einem Reaktionsgemisch) gewünscht, so kann beispielsweise durch mehrfache Absorption in jeweils niedrig konzentrierten wässrigen Phasen eine weitestgehende Desorption des Chlordioxids aus der in Schritt (a) hergestellten wässrigen Lösung erreicht werden. Eine mehrfache Absorption in jeweils niedrig konzentrierten wässrigen Phasen lässt sich unter Einsatz einer entsprechenden Zahl von Absorptionsbehältnissen erreichen (vgl. hierzu die Ausführungen weiter unten im Zusammenhang mit bevorzugten erfindungsgemäßen Vorrichtungen) oder sukzessive durch jeweiligen Austausch einer in einem früheren Absorptionsschritt (Schritt (c)) erhaltenen wässrigen Lösung gegen eine frische wässrige Phase mit hoher Aufnahmefähigkeit für Chlordioxid.

Vorzugsweise wird ein erfindungsgemäßes Verfahren so durchgeführt, dass der pH-Wert der erfindungsgemäß hergestellten Chlordioxid enthaltenden wässrigen Lösung mit dem pH-Wert der wässrigen Phase identisch ist, die in Schritt (c) (insbesondere zu Beginn von Schritt (c)) eingesetzt wird. Vorzugsweise sollte die pH-Wert-Differenz zwischen der wässrigen Phase zu Beginn von Schritt (c) und der daraus hergestellten Chlordioxid enthaltenden wässrigen Lösung zum Zeitpunkt der Entnahme oder dem Zeitpunkt der Beendigung von Schritt (c) nicht größer sein als 0,5, bevorzugt nicht größer als 0,2.

Vorzugsweise umfasst eine mit dem erfindungsgemäßen Verfahren hergestellte Chlordioxid enthaltende wässrige Lösung ein Verhältnis der Konzentration Chlordioxid zur Konzentration Chlorat von größer oder gleich 2, besonders bevorzugt von größer oder gleich 5,71. Vorzugsweise wird in Schritt (c) anfänglich eine wässrige Phase eingesetzt, die salzfrei ist. Die (insbesondere unter Verwendung dieser salzfreien wässrigen Phase gebildete) Chlordioxid enthaltende wässrige Lösung ist vorzugsweise ebenfalls salzfrei. Der Grund für die Salzfreiheit der gebildeten Chlordioxid enthaltenden wässrigen Lösung ist natürlich, dass die anfänglich salzfreie wässrige Phase lediglich mit einem Gasstrom kontaktiert wird, in dem sich keine Salze befinden können. Salzfreie Chlordioxid enthaltende wässrige Lösungen (als bevorzugtes Produkt eines erfindungsgemäßen Verfahrens) sind besonders geeignet für eine rückstandsfreie Vernebelung, beispielsweise zum Zwecke der Desinfektion/Sterilisierung von Räumen. Des Weiteren sind solche salzfreien Chlordioxid enthaltenden wässrigen Lösungen besonders langzeitstabil. Da salzfreie Chlordioxid enthaltende wässrige Lösungen keine Chlorid-, Chlorit-, Chlorat-, oder Perchlorat-Ionen enthalten, sind sie auch besonders geeignet zur Behandlung von Trinkwasser oder von Wasser zur Herstellung von Lebensmitteln, beispielsweise Babynahrung.

Vorzugsweise wird mit einem erfindungsgemäßen Verfahren eine Chlordioxid enthaltende wässrige Lösung hergestellt, die einen pH-Wert im Bereich von 6,8 bis 7,2 besitzt und zudem ein Verhältnis der Konzentration Chlordioxid zur Konzentration Chlorat von größer oder gleich 2, besonders bevorzugt von größer oder gleich 5,71 aufweist, vorzugsweise insgesamt salzfrei ist. Die pH-Neutralität solcher Lösungen und die Abwesenheit von Salzen sind dafür verantwortlich, dass derartige, mit dem erfindungsgemäßen Verfahren hergestellte Chlordioxid enthaltende wässrige Lösungen nur in deutlich geringerem Maße Korrosionen verursachen, als die Chlordioxidlösungen, welche nach Verfahren aus dem Stand der Technik hergestellt werden. Insbesondere ist die Korrosion gegenüber z.B. V2A Stahl reduziert, wie er in der Lebensmittelindustrie Verwendung findet und auf Membranen.

Wie bereits erläutert, betrifft die vorliegende Erfindung auch eine Vorrichtung zur Durchführung des erfindungsgemäßen Verfahrens, wie es in den Patentansprüchen definiert ist und vorstehend im Detail erläutert ist; diese vorstehenden Erläuterungen gelten auch für die erfindungsgemäße Vorrichtung.

Eine erfindungsgemäße Vorrichtung zur Durchführung des erfindungsgemäßen Verfahrens (wie vorstehend definiert, vorzugsweise wie vorstehend als bevorzugt bezeichnet) umfasst:
- ein erstes Behältnis zur Aufnahme einer gelöstes Chlordioxid und weitere gelöste Bestandteile umfassenden ersten wässrigen Lösung,
- eine erste Leitung für einen ersten Gasstrom, wobei die ersten Leitung dazu eingerichtet ist, den ersten Gasstrom in eine in das erste Behältnis eingefüllte erste wässrige Lösung einzuleiten,
- ein zweites Behältnis zur Aufnahme einer wässrigen Phase,
- eine zweite Leitung für einen zweiten Gasstrom, wobei die zweite Leitung das erste Behältnis und das zweite Behältnis verbindet und dazu eingerichtet ist, den zweiten Gasstrom mit der wässrigen Phase zu kontaktieren,
- eine dritte Leitung für einen dritten Gasstrom, wobei die dritte Leitung aus dem zweiten Behältnis herausführt und mit der ersten Leitung verbunden ist,
- ein oder mehrere Pumpeinrichtungen zum Erzeugen des ersten, zweiten und/oder dritten Gasstroms,

wobei die Vorrichtung so verschließbar ist, dass Chlordioxid nicht entweichen kann, wobei
   - das erste Behältnis eine gelöstes Chlordioxid und weitere gelöste Bestandteile umfassende erste wässrige Lösung umfasst
      und/oder
das zweite Behältnis eine Chlordioxid enthaltende wässrige Lösung umfasst.

Eine solche erfindungsgemäße Vorrichtung ist zur Durchführung eines bevorzugten erfindungsgemäßen Verfahrens geeignet und vorgesehen, in welchem die erste wässrige Lösung in Schritt (a) in einem ersten Behältnis hergestellt wird und der erste Gasstrom zur Durchführung des Schrittes (b) in die gemäß Schritt (a) hergestellte erste wässrige Lösung in dem ersten Behältnis eingeleitet wird.

Es versteht sich, dass im ersten Behältnis der erfindungsgemäßen Vorrichtung in der Praxis vorzugsweise der Schritt (a) des erfindungsgemäßen Verfahrens durchgeführt wird. Im ersten Behältnis wird somit vorzugsweise die gelöstes Chlordioxid und weitere gelöste Bestandteile umfassende erste wässrige Lösung hergestellt.

Es versteht sich, dass im zweiten Behältnis der erfindungsgemäßen Vorrichtung in der Praxis vorzugsweise der Schritt (c) des erfindungsgemäßen Verfahrens durchgeführt wird. Im zweiten Behältnis wird somit vorzugsweise gasförmiges Chlordioxid aus dem zweiten Gasstrom in eine wässrige Phase überführt, die im zweiten Behältnis vorgelegt ist, wobei Chlordioxid unter Bildung der Chlordioxid enthaltenden wässrigen Lösung in der wässrigen Phase gelöst und ein dritter Gasstrom gebildet wird, der an Chlordioxid abgereichert ist. Es versteht sich, dass die zweite Leitung der erfindungsgemäßen Vorrichtung in der Praxis vorzugsweise dazu vorgesehen ist, den gemäß Schritt (b) des erfindungsgemäßen Verfahrens resultierenden zweiten Gasstrom vom ersten zum zweiten Behältnis zu leiten, sodass der zweite Gasstrom in die Lage versetzt wird, mit der wässrigen Phase im zweiten Behältnis zu kontaktieren.

Es versteht sich, dass die dritte Leitung der erfindungsgemäßen Vorrichtung in der Praxis vorzugsweise dazu vorgesehen ist, den in Schritt (c) gebildeten dritten Gasstrom, der an Chlordioxid abgereichert ist, aus dem zweiten Behältnis herauszuführen (also aus dem Behältnis, in dem gasförmiges Chlordioxid aus dem zweiten Gaststrom kommend in eine wässrige Phase überführt wird) und den dritten Gasstrom der ersten Leitung zuzuführen, mit dem die dritte Leitung ja verbunden ist.

Eine erfindungsgemäße Vorrichtung ist so ausgestaltet, wie es den Bedürfnissen des erfindungsgemäßen Verfahrens entspricht, welches in der Vorrichtung durchgeführt werden soll.

Eine erfindungsgemäße Vorrichtung ist deshalb so verschließbar, dass Chlordioxid nicht entweichen kann und besonders vorzugsweise so verschließbar, dass weder Chlordioxid noch Trägergas entweichen kann (vgl. die entsprechenden Anmerkungen zu bevorzugten erfindungsgemäßen Verfahren).

Eine erfindungsgemäße Vorrichtung ist vorzugsweise so ausgestaltet, dass das erste Behältnis einen Auslass für wässrige Lösung umfasst, wobei der Auslass vorzugsweise über ein Ventil verschließbar ist. Nach Beendigung des erfindungsgemäßen Verfahrens kann im ersten Behältnis verbliebene Lösung (z. B. Restmengen an erster wässriger Lösung) durch einen solchen Auslass abgelassen werden. Es versteht sich, dass das erste Behältnis vorzugsweise auch einen vom Auslass separaten Einlass für wässrige Lösung enthält.

Vorzugsweise ist eine erfindungsgemäße Vorrichtung so ausgestaltet, dass das zweite Behältnis einen Auslass für wässrige Lösung umfasst, wobei der Auslass vorzugsweise über ein Ventil verschließbar ist. Nach Beendigung des erfindungsgemäßen Verfahrens kann im zweiten Behältnis vorhandene wässrige Lösung (üblicherweise eine wässrige Lösung, wie sie durch Schritt (c) des erfindungsgemäßen Verfahrens gebildet worden ist) aus dem zweiten Behältnis entnommen werden.

Vorzugsweise ist eine erfindungsgemäße Vorrichtung so ausgestaltet, dass das erste Behältnis ein oder mehrere Einlässe für gasförmige und/oder flüssige Substanzen umfasst, wobei der Einlass oder die Einlässe vorzugsweise über jeweilige Ventile verschließbar sind. Durch einen Einlass für flüssige Substanzen kann beispielsweise ein Chlordioxid-Präkursor oder eine gelöstes Chlordioxid und weitere gelöste Bestandteile umfassende erste wässrige Lösung in das erste Behältnis eingelassen und dort auf diese Weise bereitgestellt werden. Durch einen Einlass für gasförmige Substanzen kann beispielsweise ein Chlordioxid-Präkursor oder Chlordioxid-haltiges Gas oder der erste Gasstrom in das erste Behältnis eingeführt werden.

In einer erfindungsgemäßen Vorrichtung ist vorzugsweise die eine oder ist zumindest eine der mehreren Pumpeinrichtungen ausgewählt aus der Gruppe bestehend aus Gasförderpumpen und Strahlpumpen, wobei die Gasförderpumpe vorzugsweise eine Druckluft-Membranpumpe ist. Andere Pumpentypen können ebenfalls eingesetzt werden, abhängig von den Erfordernissen des durchzuführenden Verfahrens und den Eigenschaften der jeweiligen individuellen erfindungsgemäßen Vorrichtung.

Vorzugsweise ist in einer erfindungsgemäßen Vorrichtung die eine oder zumindest eine der mehreren Pumpeinrichtungen eine Strahlpumpe, die so eingerichtet ist, dass im Betrieb die wässrige Phase aus dem zweiten Behältnis als Treibmedium den zweiten Gasstrom verursacht und die darin enthaltenen Gase kontaktiert. Eine solche Ausgestaltung einer erfindungsgemäßen Vorrichtung ermöglicht die Durchführung eines bevorzugten erfindungsgemäßen Verfahrens, bei dem in Schritt (c) die wässrige Phase bewegt ist, nämlich in einer Strahlpumpe als Treibmedium bewegt ist. Eine entsprechende Ausgestaltung wird weiter unten noch anhand eines Beispiels näher erläutert. In einer erfindungsgemäßen Vorrichtung sind vorzugsweise ein oder mehr weitere Behältnisse zur Aufnahme einer wässrigen Phase vorgesehen sowie weitere Leitungen vorgesehen, welche die ein oder mehr weiteren Behältnisse mit dem ersten Behältnis verbinden und dazu eingerichtet sind, den zweiten Gasstrom mit einer wässrigen Phase in der oder den weiteren Behältnissen zu kontaktieren, wobei vorzugsweise Ventile vorgesehen sind, um den zweiten Gasstrom wahlweise in das zweite Behältnis und/oder in den bzw. die weiteren Behältnisse zu leiten und/oder wobei vorzugsweise der eine oder die mehreren weiteren Behältnisse jeweils einen Auslass für wässrige Lösung umfassen, wobei der Auslass vorzugsweise über ein Ventil verschließbar ist. Eine solche Ausgestaltung einer erfindungsgemäßen Vorrichtung kann insbesondere dann vorteilhaft eingesetzt werden, wenn es beabsichtigt ist, die im ersten Behältnis befindliche erste wässrige Lösung, die gelöstes Chlordioxid enthält, besonders vollständig von gelöstem Chlordioxid zu befreien (abzureichern). In jedem der zweiten und weiteren Behältnisse kann frische wässrige Phase vorgelegt werden und durch Umschalten von dem zweiten Behältnis auf ein weiteres, bzw. sukzessive auf weitere Behältnisse, wird die Abtrennung von Chlordioxid aus der wässrigen Lösung im ersten Behältnis sukzessive vervollständigt.

Durch Umschalten von dem zweiten Behältnis auf ein weiteres Behältnis wird auch eine semikontinuierliche Prozessführung ohne nennenswerte Unterbrechungen hinsichtlich des Austreibens von Chlordioxid aus der ersten wässrigen Lösung erreicht. Dies ist im Vergleich mit Verfahrensgestaltungen und Vorrichtungen, die ohne weitere Behältnisse und daher notwendigerweise diskontinuierlich betrieben werden, sehr vorteilhaft.

Zum bevorzugten Erreichen eines möglich vollständigen Abtrennungserfolgs wird der zweite Gasstrom jeweils nach entsprechender Schaltung bzw. Einstellung der Ventile sukzessive zunächst mit einer wässrigen Phase im zweiten Behältnis und danach mit jeweiligen wässrigen Phasen in dem bzw. den weiteren Behältnissen kontaktiert.

Vorzugsweise ist eine erfindungsgemäße Vorrichtung (bevorzugt eine erfindungsgemäße Vorrichtung wie vorstehend als bevorzugt bezeichnet) dazu eingerichtet, einen Gas-Kreislauf zu erzeugen, bei dem Gas im Kreis durch zumindest die Vorrichtungselemente erste Leitung, erstes Behältnis, zweite Leitung, zweites Behältnis und dritte Leitung gefördert wird. Eine Vorrichtung, die dazu eingerichtet ist, einen derartigen Gas-Kreislauf zu erzeugen, kann vorzugsweise dazu eingesetzt werden, die im zweiten Behältnis vorhandene wässrige Phase maximal mit Chlordioxid zu beladen.

Vorzugsweise ist bei einer derartigen Ausgestaltung die eine oder zumindest eine der mehreren Pumpeinrichtungen ausgewählt aus der Gruppe bestehend aus Gasförderpumpen und Strahlpumpen, und die Pumpeinrichtungen sind dann dazu eingerichtet, einen Gas-Kreislauf zu erzeugen oder zur Erzeugung eines Gas-Kreislaufs beizutragen, bei dem Gas im Kreis durch zumindest die Vorrichtungselemente erste Leitung, erstes Behältnis, zweite Leitung, zweites Behältnis und dritte Leitung gefördert wird. Entsprechende Ausgestaltungen werden weiter unten anhand der Beispiele näher erläutert.

Eine erfindungsgemäße Vorrichtung (vorzugsweise eine erfindungsgemäße Vorrichtung, wie sie vorstehend als bevorzugt bezeichnet ist) ist bevorzugt, wobei eine erste Temperiereinrichtung, vorzugsweise ein erstes Thermostat, vorgesehen ist, um den Innenraum des ersten Behältnisses zu temperieren
und/oder
eine zweite Temperiereinrichtung, vorzugsweise ein zweites Thermostat, vorgesehen ist, um den Innenraum des zweiten Behältnisses zu temperieren.

Die erste und/oder die zweite Temperiereinrichtung ist dabei vorzugsweise dazu eingerichtet, eine vorgegebene Temperaturdifferenz zwischen den Innenräumen von erstem und zweitem Behältnis einzustellen. Die vorgegebene Temperaturdifferenz ist dabei bevorzugt größer als 10 K und liegt besonders bevorzugt im Bereich zwischen 10 K und 40 K. Eine entsprechend ausgestaltete erfindungsgemäße Vorrichtung ist insbesondere zur Durchführung eines erfindungsgemäßen Verfahrens geeignet, bei dem die erste wässrige Lösung in Schritt (b) eine Temperatur T₁ besitzt und die wässrige Phase in Schritt (c) eine Temperatur T₂ besitzt, wobei T₂ kleiner ist als T₁ und wobei die Differenz zwischen T₁ und T₂ größer als 10 K ist, bevorzugt im Bereich zwischen 10 K und 40 K liegt. Wir verweisen auf die entsprechenden Ausführungen zu bevorzugten erfindungsgemäßen Verfahren.

Sofern die erfindungsgemäße Vorrichtung ein oder mehrere weitere Behältnisse umfasst, gelten die vorstehenden Ausführungen, die die Ausgestaltung und Ausrüstung des zweiten Behältnisses betreffen, entsprechend für jedes weitere Behältnis.

In einer bevorzugten erfindungsgemäßen Vorrichtung ist ein Eliminierungsmodul für Chlorgas vorgesehen, das in die zweite Leitung integriert und dazu eingerichtet ist, das Verhältnis der Mengen von Chlorgas zu Chlordioxidgas und/oder die Menge an Chlorgas im zweiten Gasstrom zu verringern, bevorzugt durch selektive chemische Umsetzung von Chlor. Im Eliminierungsmodul sind vorzugsweise die chemischen Substanzen angeordnet, welche für die Durchführung der vorstehend bereits näher erläuterten Umsetzungen von Chlorgas benötigt werden. Ein bevorzugtes Eliminierungsmodul umfasst somit festes Chloritsalz oder eine wässrige Chlorit-Lösung. Die Anordnung des Eliminierungsmoduls ist vorzugsweise so gewählt, dass in der zweiten Leitung fließendes Gas (umfassend Chlorgas neben Chlordioxidgas) die besagten chemischen Substanzen überströmen bzw. durchströmen kann, um die Eliminierung zu bewirken.

Eine bevorzugte erfindungsgemäße Vorrichtung (bevorzugt eine erfindungsgemäße Vorrichtung wie vorstehend als bevorzugt bezeichnet) umfasst ein oder mehr Vorrichtungselemente ausgewählt aus der Gruppe bestehend aus
- Hilfsmittel zum Fördern der Desorption von Chlordioxid im ersten Behältnis, vorzugsweise die Desorption fördernde Einbauten wie z. B. Glockenböden im ersten Behältnis und/oder eine oberflächenvergrößernde Gestaltung der Innenwandung des ersten Behältnisses durch den Einbau von z. B. Lamellen, Einbuchtungen bzw. die Verwendung eines Vigreux-ähnlichen Aufbaus
   und
- Hilfsmittel zum Fördern der Absorption von Chlordioxid im zweiten oder einem weiteren Behältnis, vorzugsweise eine Fritte und/oder Raschig-Ringe zur feinen Verteilung von Gas aus dem zweiten Gasstrom und/oder die Absorption fördernde Einbauten wie z. B. Glockenböden und/oder eine oberflächenvergrößernde Gestaltung der Innenwandung des zweiten und/oder weiteren Behältnisses durch den Einbau von z. B. Lamellen, Einbuchtungen bzw. die Verwendung eines Vigreux-ähnlichen Aufbaus.

Gemäß Schritt (c) des erfindungsgemäßen Verfahrens wird gasförmiges Chlordioxid aus dem zweiten Gasstrom in eine wässrige Phase überführt. Wie erläutert, wird Schritt (c) üblicherweise in einem zweiten Behältnis einer erfindungsgemäßen Vorrichtung durchgeführt. Das Kontaktieren der wässrigen Phase (Absorptionslösung) mit dem zweiten Gasstrom (Gasgemisch Trägergas/Chlordioxid) erfolgt vorzugsweise in einem Behältnis, welches einen oder mehrere apparative Elemente ausgewählt aus der Gruppe bestehend aus Tauchwäscher (Blasensäule), Sprühwäscher, Füllkörper- oder Bodenkolonnenwäscher, Strahlwäscher, Wirbelwäscher, Rotationswäscher oder Venturiwäscher enthält, vorzugsweise ein oder mehrere Elemente ausgewählt aus der Gruppe bestehend aus Tauchwäscher, Füllkörperwäscher und Bodenkolonnenwäscher.

Eine bevorzugte erfindungsgemäße Vorrichtung umfasst Ventile, die am ersten Behältnis angeordnet sind, um einen Druckausgleich zu ermöglichen. Vorzugsweise öffnen diese Ventile bei Erreichen eines vordefinierten Unterdrucks im ersten Behältnis automatisch. Bevorzugt sind die Ventile mit einem Inertgastank verknüpft, sodass vorzugsweise bei Erreichen eines vordefinierten Unterdrucks und automatischem Öffnen der Ventile Inertgas zum Druckausgleich in das erste Behältnis einströmt. Mit derartigen Ventilen oder einer derartigen Einrichtung einer erfindungsgemäßen Vorrichtung lässt sich einem Unterdruck entgegenwirken, der beispielsweise durch die Entnahme bzw. Verarmung an Chlordioxid im ersten Behältnis resultiert. Sofern im ersten Behältnis gemäß Schritt (a) des erfindungsgemäßen Verfahrens durch Reaktion entsprechender Reaktanten eine erste wässrige Lösung hergestellt werden soll, die gelöstes Chlordioxid enthält, ist es alternativ bevorzugt, den durch die Verarmung an Chlordioxid resultierenden Unterdruck dafür zu nutzen, durch ein oder mehrere entsprechende Ventile die für die Reaktion notwendigen flüssigen Reaktanten aus zugeordneten Vorratsgefäßen in das erste Behältnis (den Reaktor) zu befördern.

Das erfindungsgemäße Verfahren (wie vorstehend und/oder in den beigefügten Ansprüchen definiert) wird vorzugsweise in einer erfindungsgemäßen Vorrichtung (wie vorstehend und/oder in den beigefügten Ansprüchen definiert) durchgeführt.

Die Erfindung betrifft auch die Verwendung einer erfindungsgemäßen Vorrichtung (wie vorstehend und/oder in den beigefügten Ansprüchen definiert) zur Durchführung eines erfindungsgemäßen Verfahrens (wie vorstehend und/oder in den beigefügten Ansprüchen definiert).

Die Erfindung wird nachfolgend anhand von Beispielen unter Bezugnahme auf die beigefügten Figuren näher erläutert.

Es zeigen:
- Fig. 1:: schematischer Aufbau einer erfindungsgemäßen Vorrichtung gemäß Beispiel 1.
- Fig. 2:: schematische Darstellung einer erfindungsgemäßen Vorrichtung (Chlordioxiderzeugungsanlage) zur Erzeugung von Chlordioxid im Kreislaufverfahren, mit einer Gaspumpe und mit einem Eliminierungsmodul für Chlorgas.
- Fig. 3: schematische Darstellung einer erfindungsgemäßen Vorrichtung (Chlordioxiderzeugungsanlage) zur Erzeugung von Chlordioxid im Kreislaufverfahren, mit einer Wasserstrahlpumpe und mit einem Eliminierungsmodul für Chlorgas.
- Beispiel 1:: Vorrichtung zur Verwendung im Labor und Untersuchungen unter Verwendung einer solchen Vorrichtung:

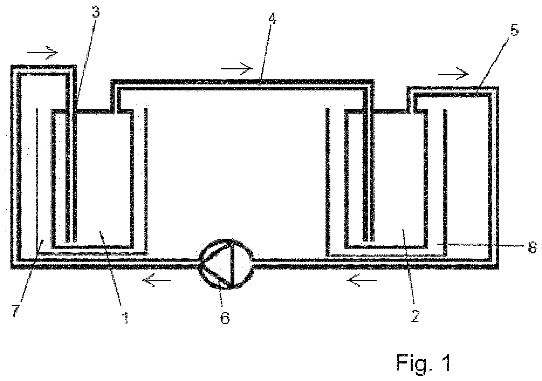

Es wurden Untersuchungen mit einer in Figur 1 schematisch dargestellten erfindungsgemäßen Vorrichtung durchgeführt. Die Vorrichtung gemäß Figur 1 ist ein Laboraufbau. Der Laboraufbau (als Beispiel einer erfindungsgemäßen Vorrichtung) umfasst eine erste Waschflasche 1 (als Beispiel für ein erstes Behältnis einer erfindungsgemäßen Vorrichtung), die mit einer zweiten Waschflasche 2 (als Beispiel für ein zweites Behältnis) zusammenwirkt. Eine erste Leitung (mit Tauchrohr) 3 mündet in die erste Waschflasche 1 und ist dazu eingerichtet, einen ersten Gasstrom in eine in das erste Behältnis 1 eingefüllte erste wässrige Lösung einzuleiten. In der Waschflasche 1 befindet sich eine erste wässrige Lösung, die gelöstes Chlordioxid und weitere gelöste Bestandteile umfasst. In der zweiten Waschflasche 2 befindet sich Wasser (als Beispiel für eine wässrige Phase) vorzugsweise destilliertes, vollentsalztes oder Trinkwasser. Die erste Waschflasche 1 und die zweite Waschflasche 2 sind über eine zweite Leitung (mit Tauchrohr) 4 verbunden. Das Tauchrohr 4 der zweiten Leitung taucht in das in Waschflasche 2 befindliche Wasser ein. Die zweite Waschflasche 2 ist über eine dritte Leitung 5 mit einer Gaspumpe 6 (als Beispiel einer Pumpeinrichtung) verbunden und geht dann in die erste Leitung 3 über. In Figur 1 symbolisieren zeichnerisch dargestellte Pfeile die Strömungsrichtung von Gasströmen in der ersten, zweiten und dritten Leitung (3, 4, 5). Im Laborbetrieb der in Figur 1 dargestellten Vorrichtung (Laboraufbau) bewirkt die Gaspumpe, dass Trägergas aus Waschflasche 1 über die zweite Leitung 4 und deren Tauchrohr in das Wasser in der Waschflasche 2 gelangt. Das Trägergas wird dort am Boden über das Tauchrohr eingeleitet. Das Trägergas verlässt die Waschflasche 2 über die dritte Leitung 5 und wird dann, von der Gaspumpe 6 gefördert, über die erste Leitung 3 und deren zugehöriges Tauchrohr in die Waschflasche 1 eingeleitet; es tritt dort am Boden über das Tauchrohr ein. Beim Vermischen des Trägergases mit der gelöstes Chlordioxid und weitere gelöste Bestandteile umfassenden ersten wässrigen Lösung in der ersten Waschflasche 1 belädt sich das Trägergas mit Chlordioxid. Somit verlässt kein reines Trägergas die Waschflasche 1, sondern vielmehr ein Chlordioxid/Trägergasgemisch, welches über die zweite Leitung 4 bzw. deren Tauchrohr in die Waschflasche 2 eintritt. Hier wird das Chlordioxid durch das Wasser in der Waschflasche 2 teilweise absorbiert. Das abgemagerte (abgereicherte) Trägergas verlässt daraufhin über die dritte Leitung 5 die zweite Waschflasche, um im Anschluss über die Gaspumpe 6 und die erste Leitung (mit Tauchrohr) 3 wieder in die erste Waschflasche 1 einzutreten.

In einem Laborexperiment wird das Ausstrippen des Chlordioxids aus der gelöstes Chlordioxid und weitere gelöste Bestandteile umfassenden ersten wässrigen Lösung in der ersten Waschflasche 1 so lange wiederholt, bis der Dampfdruck des Chlordioxids über der wässrigen Lösung in Waschflasche 1 ebenso einen stationären Zustand erreicht oder im Gleichgewicht ist wie der Dampfdruck des Chlordioxids über der gebildeten wässrigen Lösung in Waschflasche 2. Durch die Wahl der Temperaturen in den wässrigen Flüssigkeiten innerhalb der Waschflaschen 1 bzw. 2, kann dabei das Maß der Aufkonzentrierung des Chlordioxids in der zweiten Waschflasche 2 eingestellt werden. Die Geschwindigkeit der Einstellung des stationären Zustands wird im Wesentlichen durch die Größe der Austauschfläche zwischen den Phasen Gas und wässrige Lösung in den Waschflaschen bestimmt.

In der Vorrichtung gemäß Figur 1 wird somit das erfindungsgemäße Verfahren durchgeführt, das heißt, ein Verfahren zum Herstellen einer Chlordioxid enthaltenden wässrigen Lösung aus gasförmigem Chlordioxid und aus einer wässrigen Phase. Die Chlordioxid enthaltende wässrige Lösung wird in Waschflasche 2 gebildet, das dazu erforderliche gasförmige Chlordioxid strömt gemeinsam mit Trägergas durch die zweite Leitung (mit Tauchrohr) 4 in die zweite Waschflasche 2 und wird in die dort befindliche wässrige Phase (Wasser) eingeleitet. Schritt (a) des erfindungsgemäßen Verfahrens, nämlich das Herstellen einer gelöstes Chlordioxid und weitere gelöste Bestandteile umfassenden ersten wässrigen Lösung findet vorzugsweise in Waschflasche 1 statt. Dort wird im Laborexperiment eine wässrige Chlordioxid-Lösung bereitgestellt, die nach einem Chlordioxiderzeugungsverfahren hergestellt wurde, wie es im allgemeinen Teil der Beschreibung angegebenen ist; in bevorzugten Ausgestaltungen erfolgt die Herstellung der ersten wässrigen Lösung in Waschflasche 1. Schritt (b) des erfindungsgemäßen Verfahrens, nämlich das Überführen von gelöstem Chlordioxid aus der hergestellten ersten wässrigen Lösung in einen Gasstrom, der ein Trägergas umfasst, sodass ein zweiter Gasstrom resultiert, der Trägergas umfasst und an gasförmigem Chlordioxid angereichert ist, erfolgt im Laborexperiment, indem das in der ersten Waschflasche 1 befindliche gelöste Chlordioxid in einen ersten Gasstrom überführt wird, der durch die erste Leitung (mit Tauchrohr) 3 in die Waschflasche 1 eingeleitet wird. Es resultiert ein zweiter Gasstrom, der die Waschflasche 1 über die zweite Leitung 4 verlässt. Der zweite Gasstrom umfasst neben dem Trägergas auch das gasförmige Chlordioxid. Das gasförmige Chlordioxid wird (gemeinsam mit dem Trägergas) mit dem zweiten Gasstrom in die wässrige Phase (Wasser) innerhalb der zweiten Waschflasche 2 eingeleitet, wobei gemäß Schritt (c) des erfindungsgemäßen Verfahrens gasförmiges Chlordioxid in die wässrige Phase überführt wird und wobei Chlordioxid unter Bildung der Chlordioxid enthaltenden wässrigen Lösung in der wässrigen Phase in der zweiten Waschflasche 2 gelöst wird. Es bildet sich im Einklang mit Schritt (c) des erfindungsgemäßen Verfahrens ein dritter Gasstrom, der an Chlordioxid abgereichert ist. Dieser dritte Gasstrom verlässt die zweite Waschflasche 2 über die dritte Leitung 5. Im Laborexperiment wird der dritte Gasstrom über die dritte Leitung 5 und die Pumpeinrichtung (Gaspumpe) 6 zum ersten Gasstrom, der über die erste Leitung 3 in die Waschflasche 1 eingeleitet wird. Es bildet sich ein Gaskreislauf, bei dem gemäß Schritt (d) des erfindungsgemäßen Verfahrens weitere Mengen des ersten Gasstroms aus dem dritten Gasstrom hergestellt werden (der dritte Gasstrom bildet den ersten Gasstrom), und so kommt es zum Wiederholen oder Fortsetzen der erfindungsgemäßen Verfahrensschritte (b) und (c), sodass weitere Mengen an Chlordioxid in der wässrigen Phase in der zweiten Waschflasche 2 gelöst werden.

Das in Beispiel 1 eingesetzte Trägergas Luft ist gegenüber Chlordioxid inert. Der in Schritt (b) eingesetzte erste Gasstrom enthält nach dem Anfahren des erfindungsgemäßen Verfahrens, das heißt nach erster Durchführung des Schrittes (d), einen Anteil an Chlordioxid, denn der erste Gasstrom ist dann mit dem dritten Gasstrom identisch, der zwar an Chlordioxid abgereichert, jedoch (noch) nicht komplett chlordioxidfrei ist. In Schritt (c) des im Laboraufbau durchgeführten Verfahrens ist die wässrige Phase in der zweiten Waschflasche 2 ortsfest angeordnet.

Der Laboraufbau gemäß Beispiel 1 ist im vorstehend beschriebenen Betrieb verschlossen, sodass kein gasförmiges Chlordioxid aus der Vorrichtung entweicht.

Die erste und die zweite Waschflasche haben jeweils ein befülltes Volumen von 500 ml. Die Temperatur in der ersten Waschflasche 1 wurde in einem Laborexperiment auf 25 °C, die Temperatur in der zweiten Waschflasche 2 auf 10 °C eingestellt. Die Anfangskonzentration an Chlordioxid in der gemäß Schritt (a) bereitgestellten ersten wässrigen Lösung in der ersten Waschflasche 1 betrug ca. 4000 mg/L, der Volumenstrom der Gaspumpe 6 wurde auf 80 L/h eingestellt. Der Innendurchmesser der Öffnungen der Tauchrohre (Bestandteile der ersten Leitung 3 bzw. zweiten Leitung 4) betrug jeweils 0,5 cm.

Nach 150 Minuten (gemessen ab Beginn des Pumpens) hatte sich die Konzentration von Chlordioxid in der wässrigen Lösung, die sich in der zweiten Waschflasche 2 bildete, auf einen Wert von ca. 2500 mg/L erhöht. Die wässrige Lösung in der ersten Waschflasche 1 enthielt noch eine entsprechende Restmenge an Chlordioxid.

Nach Austausch der Tauchrohre (Bestandteile der ersten Leitung 3 bzw. zweiten Leitung 4) gemäß Figur 1, jeweils gegen Glasfritten P250 gemäß ISO 4793, wurde bei ansonsten identischer Verfahrensführung nach 150 Minuten eine Konzentration von ca. 3250 mg/L Chlordioxid in der wässrigen Lösung in der zweiten Waschflasche 2 gemessen.

Nach entsprechendem Austausch des Tauchrohrs der ersten Waschflasche 1 gegen eine Glasfritte P250, bei Beibehaltung des Tauchrohrs in der zweiten Waschflasche 2, aber zusätzlicher Verwendung einer Schüttung von 250 mL Raschigringen mit einer Fläche von 5 mm * 5 mm in Waschflasche 2, ergab sich bei ansonsten identischer Verfahrensführung nach 150 Minuten sogar eine Konzentration von 3500 mg/L in der wässrigen Lösung innerhalb der zweiten Waschflasche 2.

Hieraus ergibt sich, dass das erfindungsgemäße Verfahren bei Einsatz entsprechender Hilfsmittel zum Fördern der Desorption von Chlordioxid im ersten Behältnis (erste Waschflasche 1) und entsprechender Hilfsmittel zum Fördern der Absorption von Chlordioxid im zweiten Behältnis (zweite Waschflasche 2) besonders schnell zu hochkonzentrierten wässrigen Chlordioxid-Lösungen hoher Reinheit führt.

Dem Fachmann ist bekannt, dass Glasfritten zu einer Verringerung des Blasendurchmessers im Vergleich mit Tauchrohren führen, während Raschigringe besonders große Blasendurchmesser bewirken.

### Beispiel 2: Chlordioxiderzeugungsanlage (200 Liter) zur Herstellung einer chlor-, chlorid-,chlorat- und chloritfreien Chlordioxidlösung im Kreislaufverfahren unter Einsatz einer Gaspumpe und eines Eliminierungsmoduls für Chlorgas:

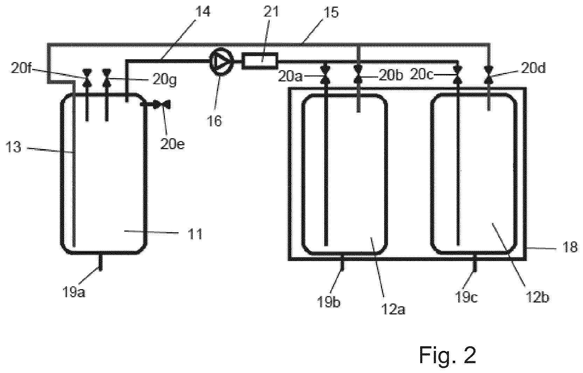

Die wesentlichen Elemente der in diesem Beispiel eingesetzten Vorrichtung (200 Liter Anlage) sind schematisch in Figur 2 dargestellt.

Die erfindungsgemäße Vorrichtung gemäß Figur 2 umfasst einen thermostatisierbaren Reaktor 11 (als Beispiel für ein erfindungsgemäß vorhandenes erstes Behältnis). Im Reaktor 11 werden Reaktanten so miteinander umgesetzt, dass dabei eine gelöstes Chlordioxid und weitere gelöste Bestandteile umfassende erste wässrige Lösung hergestellt wird (im Sinne des Schrittes (a) des erfindungsgemäßen Verfahrens). Die Vorrichtung gemäß Figur 2 umfasst zudem zwei thermostatisierbare Absorptionsbehältnisse 12a und 12b als Beispiele für ein zweites Behältnis (12a) und ein weiteres Behältnis (12b) einer erfindungsgemäßen Vorrichtung. Absorptionsbehältnis 12a und Absorptionsbehältnis 12b sind jeweils dazu vorgesehen, eine wässrige Phase aufzunehmen, und in den beiden Absorptionsbehältnissen 12a und 12b wird bei Einsatz der Vorrichtung gemäß Figur 2 Chlordioxid in der jeweils vorgelegten wässrigen Phase gelöst, sodass eine Chlordioxid enthaltende wässrige Lösung gebildet wird. Eine erste Leitung 13 (mit Tauchrohr) ist gemäß Figur 2 vorhanden und dazu eingerichtet, einen ersten Gasstrom in eine in den Reaktor 11 (erstes Behältnis) eingefüllte erste wässrige Lösung (Reaktionsgemisch) einzuleiten. Eine zweite Leitung 14 ist vorgesehen, welche den Reaktor 11 (erstes Behältnis) mit dem Absorptionsbehältnis 12a (zweites Behältnis) und dem Absorptionsbehältnis 12b (weiteres Behältnis) verbindet. Die zweite Leitung 14 ist dazu eingerichtet, einen zweiten Gasstrom, der aus dem Reaktor 11 herausgeführt wird, mit der jeweiligen wässrigen Phase im Absorptionsbehältnis 12a bzw. Absorptionsbehältnis 12b zu kontaktieren. In die zweite Leitung 14 integriert ist eine Gaspumpe 16 als Beispiel für eine erfindungsgemäß vorgesehene Pumpeinrichtung zum Erzeugen des zweiten Gasstroms und damit auch der weiteren Gasströme (insbesondere des ersten und des dritten Gasstroms). Anschlussstücke, welche die Leitung 14 an die Absorptionsbehältnisse 12a bzw. 12b anschließen, werden als Bestandteil der Leitung 14 aufgefasst. Eine dritte (Gas-)Leitung 15 führt von den Absorptionsbehältnissen in Richtung des Reaktors 11; sie geht in die erste Leitung 13 über. Erste und dritte Leitung sind im vorliegenden Aufbau Abschnitte eines einzigen Bauteils.

Dem Reaktor 11 (erstes Behältnis) sowie den Absorptionsbehältnissen 12a und 12b (zweites bzw. weiteres Behältnis) sind jeweils verschließbare Auslässe 19a, 19b, bzw. 19c zugeordnet, welche dazu eingerichtet sind, Flüssigkeit (wässrige Lösungen) aus dem Reaktor 11 (Auslass 19a), dem Absorptionsbehältnis 12a (Auslass 19b) beziehungsweise dem Absorptionsbehältnis 12b (Auslass 19c) abzulassen.

Dem ersten Absorptionsbehältnis 12a bzw. den entsprechend zugeordneten Abschnitten der zweiten Leitung 14 bzw. der dritten Leitung 15, sind Ventile 20a bzw. 20b zugeordnet, die dazu eingerichtet sind, die entsprechenden Leitungen zu öffnen bzw. zu schließen. Entsprechende Ventile 20c und 20d sind dem weiteren Absorptionsbehältnis 12b bzw. den entsprechenden Abschnitten der zweiten Leitung 14 bzw. der dritten Leitung 15 zugeordnet. Dem Reaktor 11 (erstes Behältnis) ist ein Ventil 20e zugeordnet, welches zur Begasung des Reaktors 11 bzw. zum Druckausgleich vorgesehen ist.

Dem Reaktor 11 sind zudem Zugabeventile 20f und 20g zugeordnet, welche die Zugabe von Präkursoren für die Chlordioxidherstellung gestatten, z.B. die Zugabe von Natriumperoxodisulfatlösung, Kaliumperoxomonosulfatlösung, Salzsäure, Schwefelsäure, Phosphorsäure, Chlorbleichlauge, Lösungen von unterchloriger Säure, Natriumchloratlösung, Wasserstoffperoxidlösung oder Natriumchloritlösung.

Ebenfalls in die zweite Leitung 14 integriert und der Gaspumpe 16 benachbart, ist ein Eliminierungsmodul 21 für Chlor. Es ist mit Substanzen beladen, welche bei Kontakt mit Chlor eine Reaktion bewirken, bei der Chlor in unschädliche Reaktionsprodukte überführt wird. Derartige Substanzen sind beispielsweise festes Natriumchlorit, wässrige Natriumchloritlösungen, festes Natriumarsenit oder andere Reagenzien, die mit gasförmigem Chlor reagieren, vorzugsweise spezifisch nur mit Chlor reagieren.

Den Absorptionsbehältnissen 12a und 12b ist eine Thermostateinrichtung 18 zugeordnet, die als Kühleinrichtung fungieren kann und dazu eingerichtet ist, die Temperaturen in den wässrigen Lösungen innerhalb der Absorptionsbehältnisse 12a und 12b auf eine niedrige Temperatur einzustellen, die unterhalb der Temperatur im Reaktor 11 liegt.

Der Reaktor 11 besitzt ebenso wie die Absorptionsbehältnisse 12 und 12b jeweils einen Fassungsinhalt von 200 Litern. Im Beispiel werden in den zunächst leeren und auf 30 °C thermostatisierten Reaktor 11 mit einem Volumenstrom von 129 L/h 7,5%ige Natriumchloritlösung über Ventil 20f und mit ebenfalls 129 L/h 9%ige Salzsäurelösung über Ventil 20g mittels peristaltischer Pumpen über 42 Minuten eingebracht und dort vermischt.

Im Reaktor 11 entsteht hierbei gemäß Schritt (a) des erfindungsgemäßen Verfahrens eine gelöstes Chlordioxid und weitere gelöste Bestandteile umfassende erste wässrige Lösung. Über dieser ersten Lösung (Chlordioxid-Lösung) bildet sich ein Chlordioxidgas/LuftGemisch aus, welches mittels der Gaspumpe 16 durch die zweite Leitung 14 hindurch aus dem Reaktor gepumpt und über das geöffnete Ventil 20a in das Absorptionsbehältnis 12a gedrückt wird, welcher anfänglich mit 160 Litern vollentsalztem Wasser gefüllt ist. Die zum Transport zwischen dem Reaktor 11 und dem Absorptionsbehältnis 12a vorgesehene erste Leitung 14 mündet innerhalb des Absorptionsbehältnisses 12a in eine Gaslanze, die mit einer Glasfritte P250 bestückt ist. Das Chlordioxidgas/Luft-Gemisch, welches aus der P250-Glasfritte in das Wasser im Absorptionsbehältnis 12a austritt, durchperlt dieses Wasser, welches durch den Thermostaten (Kühleinrichtung) 18 auf 6 °C gekühlt ist. Ein Teil des in das Absorptionsbehältnis 12a eingeleiteten Chlordioxidgases (aus dem Reaktor 11 stammend und mittels der Gaspumpe 16 durch die zweite Leitung 14 gefördert) löst sich hierbei im Wasser, welches im Absorptionsbehältnis 12a vorgelegt ist. Verbleibendes Chlordioxidgas/Luft-Gemisch verlässt über das geöffnete Ventil 20b das Absorptionsbehältnis 12a wieder und wird über die dritte Leitung 15, welche in die erste Leitung 13 übergeht, wieder in den Reaktor 11 zurückgeführt. Die erste Leitung 13 ist zu diesem Zweck ebenfalls mit einer Gaslanze mit P250-Glasfritte ausgestattet. Das Trägergas belädt sich anschließend beim Durchgang durch den Reaktor 11 erneut mit dem sich aus der Salzsäure-Chlorit-Reaktion permanent entwickelndem Chlordioxid. Bei den bisher geschilderten Abläufen sind die Ventile 20a und 20b, welche dem Absorptionsbehältnis 12a zugeordnet sind, geöffnet, während die Ventile 20c und 20d, welche dem Absorptionsbehältnis 12b zugeordnet sind, geschlossen sind.

Durch Schließen der Ventile 20f und 20g (Zugabeventile für die Zugabe der Präkursoren für die Chlordioxidherstellung) wird im Beispiel die Präkursorzufuhr unterbrochen, sodass die Chlordioxiderzeugung im Reaktor 11 zum Erliegen kommt.

Durch Schließen der Ventile 20a und 20b (die dem Absorptionsbehältnis 12a zugeordnet sind) und Öffnen der Ventile 20c und 20d (die dem Absorptionsbehältnis 12b, einem weiteren Behältnis der Vorrichtung gemäß Figur 2, zugeordnet sind, kommt es im Anschluss zur Desorption eines Großteils des im Reaktor 11 verbliebenen Chlordioxids (ca. 1 kg) und zur Absorption dieses Großteils an Chlordioxid im Absorptionsbehältnis 12b, das (ebenso wie Absorptionsbehältnis 12a) mit Wasser befüllt ist, welches aber bis zum Öffnen der Ventile 20c und 20d noch kein Chlordioxid aufgenommen hat und daher zu diesem Zeitpunkt noch die maximale Aufnahmekapazität besitzt.

Die Ventile 20c und 20d werden dann geschlossen, die Gaspumpe 16 wird abgeschaltet, das Ventil 20e wird geöffnet und dann der Reaktor 11 durch Öffnen des Auslasses 19a entleert. Die in diesem Fall austretende salzsaure Lösung (wegen des Einsatzes von Natriumchloritlösung und Salzsäurelösung als Reaktionspartner) wird einer Neutralisation zugeführt; das neutralisierte Produktgemisch wird dem Abwasserkanal zugeführt.

Aus dem Absorptionsbehältnis 12a wird durch Öffnen des Auslasses 19b die darin hergestellte Chlordioxid-Lösung entnommen und dem jeweiligen Verbraucher zugeführt.

Die vorstehend unter Bezugnahme auf das Absorptionsbehältnis 12a erläuterten Verfahrensschritte und Maßnahmen sind in analoger Weise auch für bzw. mit dem Absorptionsbehältnis 12b durchführbar. Die Entnahme von Chlordioxid-Lösung aus dem Absorptionsbehältnis 12b erfolgt somit, nachdem dieses in einem Absorptionsvorgang, wie oben unter Bezugnahme auf das Absorptionsbehältnis 12a dargelegt, die voreingestellte Chlordioxid-Menge aufgenommen hat.

Nach Entnahme der Chlordioxid-Lösung aus Absorptionsbehältnis 12a bzw. 12b, werden die zumindest teilweise geleerten Absorptionsbehältnisse vor einer erneuten Absorption wieder mit neuer wässriger Phase befüllt.

Im Reaktor 11 bildet sich während des Reaktionszeitraums in ca. 10 Minuten eine nahezu konstante Konzentration von ca. 6 g/L Chlordioxid heraus. Im Absorptionsbehältnis 12a 1 hat sich nach 10 Minuten Reaktionsdauer bereits eine Konzentration von ca. 10,4 g/L gebildet, was bei einer Füllmenge von 160 L einer Gesamtmasse an Chlordioxid von ca. 1,7 kg entspricht. Nach 60 Minuten liegt die Konzentration im Absorptionsbehältnis 12a bei > 20 g/L. Hierbei ist zu beachten, dass lediglich für einen Zeitraum von 42 Minuten Natriumchloritlösung und Salzsäurelösung in den Reaktor eingebracht wurden; es versteht sich daher, dass die Zunahme der Chlordioxid-Konzentration im Absorptionsbehältnis 12a entsprechend begrenzt ist.

In eigenen Untersuchungen konnten im Zuge der mehrstufigen Absorption ChlordioxidKonzentrationen zwischen 0 und 20 g/L im Absorptionsbehältnis 12a eingestellt werden.

Durch Kühlung der Absorptionslösungen können langzeitstabile Lösungen erhalten werden. Insbesondere wird die Reaktion 3 H₂O + 6 ClO₂ → 5 ClO₃⁻ +Cl⁻+ 6 H⁺ durch niedrige Temperaturen verlangsamt. Bei Begrenzung der Chlordioxid-Konzentration in einem Absorptionsbehältnis auf einen Bereich von z.B. 2-3 g/L bleibt man in dem empfohlenen Konzentrationsbereich der EN 12671 und erhält Chlordioxid-Lösungen, die über Monate stabil sind. Chlordioxidkonzentrationen in einem gewünschten Bereich, z.B. im Einklang mit den Empfehlungen gemäß EN 12671, lassen sich alternativ bzw. in einem nachfolgendem Schritt auch durch Verdünnen von hergestellten konzentrierten Chlordioxidlösungen mit Wasser, z.B. vollentsalztem Wasser oder Trinkwasser, gewinnen.

### Beispiel 3: Chlordioxiderzeugungsanlage (200 Liter) zur Herstellung einer chlor-, chlorid-, chlorat- und chloritfreien Chlordioxidlösung im Kreislaufverfahren unter Einsatz einer Wasserstrahlpumpe und eines Eliminierungsmoduls für Chlorgas:

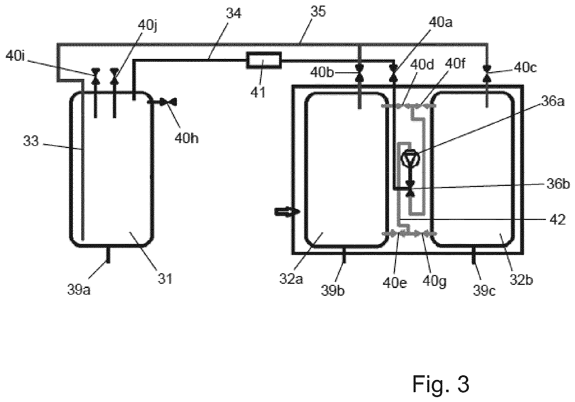

Die gemäß Beispiel 3 eingesetzte Chlordioxiderzeugungsanlage umfasst gemäß Figur 3 einen thermostatisierten Reaktor 31 (ein erstes Behältnis im Sinne der vorliegenden Erfindung), ein mit Wasser befülltes thermostatisierbares Absorptionsbehältnis 32a (ein zweites Behältnis im Sinne der vorliegenden Erfindung), ein mit Wasser befülltes thermostatisierbares Absorptionsbehältnis 32b (ein weiteres Behältnis im Sinne der vorliegenden Erfindung), eine erste Leitung 33, die dem Reaktor 31 zugeordnet ist (vgl. die analogen Ausführungen zu Figur 2, Beispiel 2), eine zweite Leitung 34, welche den Reaktor 31 mit den Absorptionsbehältnisen 32a bzw. 32b verbindet (vgl. den analogen Aufbau gemäß Figur 2, Beispiel 2) sowie eine dritte Leitung 35, welche das Absorptionsbehältnis 32a und das Absorptionsbehältnis 32b mit dem Reaktor 31 verbindet, wobei die dritte Leitung 35 in die erste Leitung 33 übergeht (vgl. den analogen Aufbau gemäß Figur 2). Die Vorrichtung gemäß Figur 3 umfasst zudem eine Pumpe 36a zum Umpumpen der flüssigen Medien in den Absorptionsbehältnissen 32a und 32b; die Pumpe 36a ist so angeordnet, dass umgepumptes Medium als Treibmedium einer zugeordneten Wasserstrahlpumpe 36b fungieren kann. Die Vorrichtung gemäß Figur 3 umfasst zudem ein Eliminierungsmodul 41 für Chlor. Zudem sind Auslässe 39a, 39b und 39c vorgesehen, die, wie in Figur 3 gezeigt, dem Reaktor 31, dem Absorptionsbehältnis 32a bzw. dem Absorptionsbehältnis 32b zugeordnet und zum Ablassen von Flüssigkeit aus diesen Bauteilen vorgesehen sind. Ein Ventil 40a ist in der zweiten Leitung 34 angeordnet und dazu eingerichtet, den Gasstrom durch diese Leitung bei Bedarf zu verhindern. Ein Leitungssystem 42 umfasst die Pumpe 36a zum Umpumpen der flüssigen Medien. Das Absorptionsbehältnis 32a ist über Ventile 40d und 40e und entsprechende Anschlussstücke mit dem Leitungssystem 42 verbunden, sodass bei geöffneten Ventilen 40d, 40e flüssiges Medium, welches sich im Absorptionsbehältnis 32a befindet, über das Leitungssystem 42 mittels der Pumpe 36a umgepumpt werden kann; flüssiges Medium wird dem Absorptionsbehältnis 32a unten entnommen (durch das Ventil 40e hindurch) und oben (durch das Ventil 40d hindurch) dem Absorptionsbehältnis 32a wieder zugeführt. In analoger Weise ist das Absorptionsbehältnis 32b über Ventile 40f und 40g mit dem Leitungssystem 42 verbunden, sodass flüssiges Medium aus dem Absorptionsbehältnis 32b umgepumpt werden kann. In Strömungsrichtung der Pumpe 36a nachgeschaltet ist eine Wasserstrahlpumpe 36b, welche dazu eingerichtet ist, einen Gasstrom in der zweiten Leitung 34 zu erzeugen, sodass chlordioxidhaltiges Gas aus dem Reaktor 31 gefördert wird. Weitere Ventile 40h, 40i und 40j sind dem Reaktor 31 zugeordnet. Ventil 40h hat eine Funktion wie gemäß Figur 2 das Ventil 20e; die Funktion des Ventils 40i entspricht der Funktion des Ventils 20f aus Figur 2; und das Ventil 40j hat eine Funktion wie das Ventil 20g aus Figur 2. Auf die dortigen Ausführungen sei verwiesen.

Der Reaktor 31 besitzt ebenso wie die Absorptionsbehältnisse 32a und 32b jeweils einen Fassungsinhalt von 200 Litern. Im Beispiel werden in den zunächst leeren und auf 30 °C thermostatisierten Reaktor 31 mit einem Volumenstrom über das Ventil 40i Natriumchloritlösung und über Ventil 40j Salzsäurelösung mittels peristaltischer Pumpen eingebracht und dort vermischt.

Im Reaktor 31 entsteht hierbei gemäß Schritt (a) des erfindungsgemäßen Verfahrens eine gelöstes Chlordioxid und weitere gelöste Bestandteile umfassende erste wässrige Lösung. Über dieser ersten Lösung (Chlordioxid-Lösung) bildet sich ein Chlordioxidgas/LuftGemisch aus. Dieses wird nach dem Öffnen des Ventils 40a durch die zweite Leitung 34 hindurch aus dem Reaktor 31 gepumpt. Es durchströmt das Eliminierungsmodul 41 für Chlorgas, das in die zweite Leitung 34 integriert ist. Dabei wird bei geöffneten Ventilen 40d und 40e und angeschalteter Pumpe 36a zum Umpumpen des flüssigen, im Absorptionsbehältnis 32a befindlichen Mediums, das Chlordioxidgas/Luft-Gemisch in der Wasserstrahlpumpe 36b in das umgepumpte Treibmedium (Wasser) aus dem Absorptionsbehältnis 32a überführt und gelangt über den Kreislauf des Flüssigkeitsmediums in das Absorptionsbehältnis 32a.

Das Absorptionsbehältnis 32a war in eigenen Untersuchungen anfänglich mit 160 Litern vollentsalztem Wasser gefüllt. Die Temperatur im ersten Absorptionsbehältnis 32a und dem darin enthaltenen Flüssigmedium (vollentsalztem Wasser) war niedriger als die Temperatur im Reaktor 31.

Die Pumpe 36a zum Umpumpen der flüssigen Medien saugt das Flüssigmedium aus dem Absorptionsbehältnis 32a an und treibt es über die Wasserstrahlpumpe 36b. Der in der Wasserstrahlpumpe nach dem Venturi-Prinzip entstehende Unterdruck sorgt für eine innige Vermischung des Chlordioxidgas/Luft-Gemisches aus Reaktor 31 mit dem umgepumpten Flüssigmedium aus dem Absorptionsbehältnis 32a. Hinter dem Ventil 40d tritt das Gemisch aus Chlordioxidgas, Luft und Flüssigmedium in das Absorptionsbehältnis 32a ein. Dort kommt es zur Separation insbesondere des vergleichsweise schlecht löslichen Trägergases Luft aus dem Gemisch; auch geringe Anteile des gasförmigen Chlordioxids werden separiert und bilden gemeinsam mit der separierten Luft ein Gasgemisch. Dieses Gasgemisch verlässt als Gasstrom (dritter Gasstrom im Sinne der vorliegenden Erfindung), der an Chlordioxid abgereichert ist, das Absorptionsbehältnis 32a und wird durch das Ventil 40b hindurch und entlang der Leitung 35 dem Reaktor 31 wieder zugeführt. Während dieses Vorganges sind die Ventile 40c, 40g und 40f geschlossen. Das Trägergas Luft belädt sich beim anschließenden Durchgang durch den Reaktor 31 wieder mit dem sich aus der Salzsäure-Chlorit-Reaktion permanent entwickelnden Chlordioxid.

Durch Schließen der Ventile 40i und 40j (Zugabeventile für die Zugabe der Präkursoren für die Chlordioxidherstellung) wird die Präkursorzufuhr unterbrochen, sodass die Chlordioxiderzeugung im Reaktor 31 zum Erliegen kommt.

Durch Schließen der Ventile 40b, 40d und 40e, die dem ersten Absorptionsbehältnis 32a zugeordnet sind, und Öffnen der Ventile 40c, 40f und 40g, die dem Absorptionsbehältnis 32b zugeordnet sind (einem weiteren Behältnis der Vorrichtung gemäß Figur 3), kommt es im Anschluss zur Desorption eines Großteils des im Reaktor 31 verbliebenen Chlordioxids (ca. 1kg) und zur Absorption dieses Großteils an Chlordioxid im vorgelegten Wasser im Absorptionsbehältnis 32b.

Das Absorptionsbehältnis 32b war anfänglich in eigenen Untersuchungen mit 160 L vollentsalztem Wasser befüllt, welches bis zum Öffnen der Ventile 40c, 40f und 40g noch kein Chlordioxid aufgenommen hatte und daher bis zum Öffnen der Ventile die maximale Aufnahmekapazität besaß.

Die Ventile 40c, 40f und 40g werden dann geschlossen, die Pumpe 36a abgeschaltet, das Ventil 40h geöffnet (hinsichtlich seiner Funktion entspricht es dem Ventil 20e gemäß Figur 2) und dann der Reaktor 31 durch Öffnen des Auslasses 39a entleert (vgl. die analoge Erläuterung betreffend Beispiel 2, Figur 2). Die in diesem Fall salzsaure Lösung wird einer Neutralisation zugeführt; das neutralisierte Produktgemisch wird dem Abwasserkanal zugeführt.

Aus dem Absorptionsbehältnis 32a wird durch Öffnen des Auslasses 39b die darin hergestellte Chlordioxid-Lösung entnommen und dem jeweiligen Verbraucher zugeführt.

Nach Ablassen des Inhalts des Reaktors 31, Schließen des Ventils 40h, Öffnen der Ventile 40a, 40c, 40g und 40f sowie der Ventile 40i und 40j sowie Wiederinbetriebnahme der Pumpe 36a kommt es zur Überführung von Chlordioxidgas in das Absorptionsbehältnis 32b, wobei hinsichtlich der Wirkung der Pumpe 36a und der Wasserstrahlpumpe 36b die vorstehend gemachten Ausführungen (betreffend die Überführung von Chlordioxid in das Flüssigmedium im Absorptionsbehältnis 32a) entsprechend gelten.

Soweit nicht anders angegeben, entspricht die Ausgestaltung und Benutzung der Vorrichtung gemäß Beispiel 3, Figur 3 der Ausgestaltung und Benutzung der Vorrichtung gemäß Beispiel 2, Figur 2.

### Bezugszeichenliste:

- 1: erste Waschflasche (erstes Behältnis)
- 2: zweite Waschflasche (zweites Behältnis)
- 3: erste Leitung (mit Tauchrohr)
- 4: zweite Leitung (mit Tauchrohr)
- 5: dritte Leitung
- 6: Gaspumpe (Pumpeinrichtung)
- 7: Heizeinrichtung (erste Temperiereinrichtung)
- 8: Kühleinrichtung (zweite Temperiereinrichtung)
- 11; 31: thermostatisierbarer Reaktor (erstes Behältnis)
- 12a; 32a: Absorptionsbehältnis (zweites Behältnis)
- 12b; 32b: Absorptionsbehältnis (weiteres Behältnis)
- 13; 33: erste Leitung (mit Tauchrohr)
- 14; 34: zweite Leitung (mit Tauchrohr)
- 15; 35: dritte Leitung
- 16: Gaspumpe (Pumpeinrichtung)
- 18: Kühleinrichtung, Thermostat (zweite Temperiereinrichtung)
- 19a: Auslass für Lösung aus 11
- 19b: Auslass für Lösung aus 12a
- 19c: Auslass für Lösung aus 12b
- 20a-g: Ventile
- 21; 41: Eliminierungsmodul für Chlor
- 36a: Pumpe zum Umpumpen der flüssigen Medien
- 36b: Wasserstrahlpumpe
- 39a: Auslass für Lösung aus 31
- 39b: Auslass für Lösung aus 32a
- 39c: Auslass für Lösung aus 32b
- 40a-j: Ventile
- 42: Leitungssystem

## Patentansprüche

1. Verfahren zum Herstellen einer Chlordioxid enthaltenden wässrigen Lösung aus gasförmigem Chlordioxid und aus einer wässrigen Phase,
mit folgenden Schritten:
(a) Herstellen einer gelöstes Chlordioxid und weitere gelöste Bestandteile umfassenden ersten wässrigen Lösung,
(b) Überführen von gelöstem Chlordioxid aus der hergestellten ersten wässrigen Lösung in einen ersten Gasstrom, der ein Trägergas umfasst, so dass ein zweiter Gasstrom resultiert, der Trägergas umfasst und an gasförmigem Chlordioxid angereichert ist,
(c) Überführen von gasförmigem Chlordioxid aus dem zweiten Gasstrom in eine wässrige Phase, wobei Chlordioxid unter Bildung der Chlordioxid enthaltenden wässrigen Lösung in der wässrigen Phase gelöst und ein dritter Gasstrom gebildet wird, der an Chlordioxid abgereichert ist,
(d) Herstellen weiterer Mengen des ersten Gasstroms
aus dem dritten Gasstrom
oder
aus einem Chlordioxid enthaltenden Anteil des dritten Gasstroms und hinzugefügten weiteren gasförmigen Verbindungen
und Wiederholen oder Fortsetzen der vorstehenden Verfahrensschritte (b) und (c), so dass weitere Mengen an Chlordioxid in der wässrigen Phase gelöst werden,
wobei
das Herstellen einer gelöstes Chlordioxid und weitere gelöste Bestandteile umfassenden ersten wässrigen Lösung in Schritt (a) nach einem Verfahren erfolgt, das ausgewählt ist aus der Gruppe bestehend aus:
- Säure-Chlorit-Verfahren,
- Salzsäure-Chlorit-Verfahren,
- Säure-Hypochlorit-Chlorit-Verfahren,
- Peroxodisulfat-Chlorit-Verfahren,
- Peroxodisulfat-Peroxomonosulfat-Chlorit-Verfahren,
- Chlorid-Elektrolyse- Verfahren,
- Chlorit-Elektrolyse-Verfahren
und wobei
die erste wässrige Lösung in Schritt (b) eine Temperatur T₁ besitzt und die wässrige Phase in Schritt (c) eine Temperatur T₂ besitzt, wobei T₂ kleiner ist als T₁.

2. Verfahren nach Anspruch 1, wobei
ein, zwei oder mehr der weiteren gelösten Bestandteile der in Schritt (a) hergestellten ersten wässrigen Lösung ausgewählt sind aus der Gruppe bestehend aus Säuren und Säureanhydriden, peroxogruppenhaltige Verbindungen und chlorhaltige Verbindungen,
wobei die peroxogruppenhaltigen Verbindungen vorzugsweise ausgewählt sind aus der Gruppe bestehend aus
Peroxodisulfat, bevorzugt Natriumperoxodisulfat, und
Peroxomonosulfat, bevorzugt Kaliumperoxomonosulfat,
und/oder
wobei die chlorhaltigen Verbindungen vorzugsweise ausgewählt sind aus der Gruppe bestehend aus
molekularem Chlor, Chlorid, Hypochlorit, Chlorit und Chlorat
und/oder
wobei die Säuren und Säureanhydride vorzugsweise ausgewählt sind aus der Gruppe bestehend aus
Mineralsäuren, bevorzugt ausgewählt aus der Gruppe bestehend aus Schwefelsäure, Salzsäure, Phosphorsäure und Salpetersäure
und
organische Säuren und organische Anhydride, bevorzugt ausgewählt aus der Gruppe bestehend aus Essigsäure, Essigsäureanhydrid und Propionsäure.

3. Verfahren nach einem der vorangehenden Ansprüche, wobei das in Schritt (b) eingesetzte Trägergas
gegenüber Chlordioxid inert ist
und/oder
ausgewählt ist aus der Gruppe bestehend aus Luft, Stickstoff, Kohlendioxid, Sauerstoff, Edelgase und deren Mischungen
und/oder
der in Schritt (b) eingesetzte erste Gasstrom zumindest zeitweilig, vorzugsweise zumindest nach Schritt (d), einen Anteil an Chlordioxid enthält.

4. Verfahren nach einem der vorangehenden Ansprüche, wobei
der erste Gasstrom zur Durchführung des Schrittes (b) in die gemäß Schritt (a) hergestellte erste wässrige Lösung eingeleitet wird, vorzugsweise fein verteilt eingeleitet wird, wobei vorzugsweise die erste wässrige Lösung in Schritt (a) in einem ersten Behältnis hergestellt wird und der erste Gasstrom zur Durchführung des Schrittes (b) in die gemäß Schritt (a) hergestellte erste wässrige Lösung in dem ersten Behältnis eingeleitet wird
und/oder
der in Schritt (b) resultierende zweite Gasstrom zur Durchführung des Schrittes (c) in die wässrige Phase eingeleitet wird, vorzugsweise fein verteilt eingeleitet wird.

5. Verfahren nach einem der vorangehenden Ansprüche, wobei
T₂ im Bereich von 0 °C bis 15 °C liegt
und/oder
T₁ im Bereich von 20 bis 40 °C liegt
und/oder
die Differenz zwischen T₁ und T₂ größer ist als 10 K und bevorzugt im Bereich zwischen 10 K und 40 K liegt.

6. Verfahren nach einem der vorangehenden Ansprüche, wobei in Schritt (c) die wässrige Phase
ortsfest ist, vorzugsweise ortsfest in einem stationären Behältnis angeordnet ist oder
bewegt ist, vorzugsweise in einer Strahlpumpe als Treibmedium bewegt ist, bevorzugt so, dass der zweite Gasstrom mit der bewegten wässrigen Phase kontaktiert und vom bewegten Medium aufgenommen wird.

7. Verfahren nach einem der vorangehenden Ansprüche, wobei in Schritt (b) auch Chlorgas aus der hergestellten ersten wässrigen Lösung in den ersten Gasstrom überführt wird, so dass der zweite Gasstrom auch an Chlorgas angereichert ist, wobei vorzugsweise das Verhältnis der Mengen von Chlorgas zu Chlordioxidgas und/oder die Menge an Chlorgas im zweiten Gasstrom vor Schritt (c) verringert wird, bevorzugt durch selektive chemische Umsetzung von Chlor.

8. Verfahren nach einem der vorangehenden Ansprüche, wobei das Verfahren
in einer verschließbaren Vorrichtung so geführt wird, dass kein gasförmiges Chlordioxid aus der Vorrichtung entweicht
und/oder
zumindest so lange fortgesetzt wird, bis
- das Verhältnis von Chlordioxidkonzentration in der ersten wässrigen Lösung zu Chlordioxidkonzentration in der in Schritt (c) gebildeten wässrigen Lösung einen vorbestimmten Wert erreicht hat
und/oder
- die Chlordioxidkonzentration oder die Chlordioxidmenge in der in Schritt (c) gebildeten wässrigen Lösung einen vorbestimmten Wert erreicht hat
und/oder
wobei in der in Schritt (c) gebildeten Chlordioxid enthaltenden wässrigen Lösung die Chlordioxidkonzentration
- im Bereich von 5 bis 20 g/L liegt, bevorzugt im Bereich von 9 bis 20 g/L, besonders bevorzugt im Bereich von 12 bis 20 g/L, ganz besonders bevorzugt im Bereich von 15 bis 20 g/L,
und/oder
- so eingestellt wird, dass die korrespondierende Konzentration im Gasraum bei der vorliegenden Temperatur gemäß DIN EN 12671:2016-09 kleiner ist als 300 g/m³ und/oder kleiner ist als 10 Vol.-%.

9. Verfahren nach einem der vorigen Ansprüche, wobei
die erste wässrige Lösung in Schritt (a) in einem ersten Behältnis hergestellt wird und der erste Gasstrom zur Durchführung des Schrittes (b) in die gemäß Schritt (a) hergestellte erste wässrige Lösung in dem ersten Behältnis eingeleitet wird, wobei im ersten Behältnis die Desorption von Chlordioxid durch Hilfsmittel gefördert wird, vorzugsweise durch die Desorption fördernde Einbauten im ersten Behältnis und/oder eine oberflächenvergrößernde Gestaltung der Innenwandung des ersten Behältnisses
und/oder
Schritt (c) in einem zweiten Behältnis durchgeführt wird, wobei im zweiten Behältnis die Absorption von Chlordioxid gefördert wird durch eine Fritte und/oder Raschig-Ringe zur feinen Verteilung von Gas aus dem zweiten Gasstrom und/oder die Absorption fördernde Einbauten und/oder eine oberflächenvergrößernde Gestaltung der Innenwandung des zweiten und/oder weiteren Behältnisses
und/oder
die wässrige Phase in Schritt (c) in einer Strahlpumpe als Treibmedium bewegt ist, so dass der zweite Gasstrom mit der bewegten wässrigen Phase kontaktiert und vom bewegten Medium aufgenommen wird.

10. Vorrichtung zur Durchführung des Verfahrens nach einem der Ansprüche 1 bis 9, umfassend
- ein erstes Behältnis zur Aufnahme einer gelöstes Chlordioxid und weitere gelöste Bestandteile umfassenden ersten wässrigen Lösung,
- eine erste Leitung für einen ersten Gasstrom, wobei die erste Leitung dazu eingerichtet ist, den ersten Gasstrom in eine in das erste Behältnis eingefüllte erste wässrige Lösung einzuleiten,
- ein zweites Behältnis zur Aufnahme einer wässrigen Phase,
- eine zweite Leitung für einen zweiten Gasstrom, wobei die zweite Leitung das erste Behältnis und das zweite Behältnis verbindet und dazu eingerichtet ist, den zweiten Gasstrom mit der wässrigen Phase zu kontaktieren,
- eine dritte Leitung für einen dritten Gasstrom, wobei die dritte Leitung aus dem zweiten Behältnis herausführt und mit der ersten Leitung verbunden ist,
- ein oder mehrere Pumpeinrichtungen zum Erzeugen des ersten, zweiten und/oder dritten Gasstroms,
wobei die Vorrichtung so verschließbar ist, dass Chlordioxid nicht entweichen kann,
wobei
- das erste Behältnis eine gelöstes Chlordioxid und weitere gelöste Bestandteile umfassende erste wässrige Lösung umfasst
und/oder
das zweite Behältnis eine Chlordioxid enthaltende wässrige Lösung umfasst.

11. Vorrichtung nach Anspruch 10, wobei
- das erste Behältnis einen Auslass für wässrige Lösung umfasst, wobei der Auslass vorzugsweise über ein Ventil verschließbar ist,
und/oder
- das zweite Behältnis einen Auslass für wässrige Lösung umfasst, wobei der Auslass vorzugsweise über ein Ventil verschließbar ist,
und/oder
- das erste Behältnis ein oder mehrere Einlässe für gasförmige und/oder flüssige Substanzen umfasst, wobei der Einlass oder die Einlässe vorzugsweise über jeweilige Ventile verschließbar sind,
und/oder
- die eine oder zumindest eine der mehreren Pumpeinrichtungen ausgewählt ist aus der Gruppe bestehend aus Gasförderpumpen und Strahlpumpen, wobei die Gasförderpumpe vorzugsweise eine Druckluft-Membranpumpe ist,
und/oder
- die eine oder zumindest eine der mehreren Pumpeinrichtungen eine Strahlpumpe ist, die so eingerichtet ist, dass im Betrieb die wässrige Phase aus dem zweiten Behältnis als Treibmedium den zweiten Gasstrom verursacht und die darin enthaltenen Gase kontaktiert
und/oder
- ein oder mehr weitere Behältnisse zur Aufnahme einer wässrigen Phase vorgesehen sind sowie weitere Leitungen vorgesehen sind, welche die ein oder mehr weiteren Behältnisse mit dem ersten Behältnis verbinden und dazu eingerichtet sind, den zweiten Gasstrom mit einer wässrigen Phase in der oder den weiteren Behältnissen zu kontaktieren, wobei vorzugsweise Ventile vorgesehen sind, um den zweiten Gasstrom wahlweise in das zweite Behältnis und/oder in den bzw. die weiteren Behältnisse zu leiten und/oder wobei vorzugsweise der eine oder die mehreren weiteren Behältnisse jeweils einen Auslass für wässrige Lösung umfassen, wobei der Auslass vorzugsweise über ein Ventil verschließbar ist
und/oder
- die Vorrichtung dazu eingerichtet ist, einen Gas-Kreislauf zu erzeugen, bei dem Gas im Kreis durch zumindest die Vorrichtungselemente erste Leitung, erstes Behältnis, zweite Leitung, zweites Behältnis und dritte Leitung gefördert wird,
wobei vorzugsweise die eine oder zumindest eine der mehreren Pumpeinrichtungen ausgewählt ist aus der Gruppe bestehend aus Gasförderpumpen und Strahlpumpen, und dazu eingerichtet ist, einen Gas-Kreislauf zu erzeugen oder zur Erzeugung eines Gas-Kreislaufs beizutragen, bei dem Gas im Kreis durch zumindest die Vorrichtungselemente erste Leitung, erstes Behältnis, zweite Leitung, zweites Behältnis und dritte Leitung gefördert wird,
und/oder
- ein Eliminierungsmodul für Chlorgas vorgesehen ist, das in die zweite Leitung integriert und dazu eingerichtet ist, das Verhältnis der Mengen von Chlorgas zu Chlordioxidgas und/oder die Menge an Chlorgas im zweiten Gasstrom zu verringern, bevorzugt durch selektive chemische Umsetzung von Chlor
und/oder
- die Vorrichtung weiter umfasst ein oder mehr Vorrichtungselemente ausgewählt aus der Gruppe bestehend aus
- Hilfsmittel zum Fördern der Desorption von Chlordioxid im ersten Behältnis, vorzugsweise die Desorption fördernde Einbauten im ersten Behältnis und/oder eine oberflächenvergrößernde Gestaltung der Innenwandung des ersten Behältnisses
und
- Hilfsmittel zum Fördern der Absorption von Chlordioxid im zweiten und/oder einem weiteren Behältnis, vorzugsweise eine Fritte und/oder Raschig-Ringe zur feinen Verteilung von Gas aus dem zweiten Gasstrom und/oder die Absorption fördernde Einbauten und/oder eine oberflächenvergrößernde Gestaltung der Innenwandung des zweiten und/oder weiteren Behältnisses.

12. Vorrichtung nach einem der Ansprüche 10 und 11, wobei
eine erste Temperiereinrichtung, vorzugsweise ein erstes Thermostat, vorgesehen ist, um den Innenraum des ersten Behältnisses zu temperieren
und/oder
eine zweite Temperiereinrichtung, vorzugsweise ein zweites Thermostat, vorgesehen ist, um den Innenraum des zweiten Behältnisses zu temperieren,
wobei die erste und/oder die zweite Temperiereinrichtung vorzugsweise dazu eingerichtet ist, eine vorgegebene Temperaturdifferenz zwischen den Innenräumen von erstem und zweitem Behältnis einzustellen, wobei die vorgegebene Temperaturdifferenz bevorzugt größer ist als 10 K und besonders bevorzugt im Bereich zwischen 10 K und 40 K liegt.

13. Vorrichtung nach einem der vorangehenden Ansprüche, weiter umfassend ein oder mehr Vorrichtungselemente ausgewählt aus der Gruppe bestehend aus
- die Desorption fördernde Einbauten im ersten Behältnis und/oder eine oberflächenvergrößernde Gestaltung der Innenwandung des ersten Behältnisses als Hilfsmittel zum Fördern der Desorption von Chlordioxid im ersten Behältnis,
und
- eine Fritte und/oder Raschig-Ringe im zweiten und/oder einem weiteren Behältnis zur feinen Verteilung von Gas aus dem zweiten Gasstrom und/oder die Absorption von Chlordioxid fördernde Einbauten und/oder eine oberflächenvergrößernde Gestaltung der Innenwandung des zweiten und/oder weiteren Behältnisses,
und
- eine Strahlpumpe, die so eingerichtet ist, dass im Betrieb die wässrige Phase aus dem zweiten Behältnis als Treibmedium den zweiten Gasstrom verursacht und die darin enthaltenen Gase kontaktiert.

14. Verwendung einer Vorrichtung nach einem der Ansprüche 10 bis 13 zur Durchführung eines Verfahrens nach einem der Ansprüche 1 bis 9.

15. Verfahren nach einem der Ansprüche 1 bis 9, wobei das Verfahren in einer Vorrichtung nach einem der Ansprüche 10 bis 13 durchgeführt wird.

## Claims

1. Process for producing an aqueous solution containing chlorine dioxide from gaseous chlorine dioxide and from an aqueous phase,
comprising the following steps:
(a) production of a first aqueous solution comprising dissolved chlorine dioxide and further dissolved constituents,
(b) transfer of dissolved chlorine dioxide from the first aqueous solution produced into a first gas stream comprising a carrier gas, resulting in a second gas stream which comprises carrier gas and is enriched in gaseous chlorine dioxide,
(c) transfer of gaseous chlorine dioxide from the second gas stream into an aqueous phase, with chlorine dioxide being dissolved in the aqueous phase to form the aqueous solution containing chlorine dioxide and a third gas stream which is depleted in chlorine dioxide being formed,
(d) production of further amounts of the first gas stream
from the third gas stream
or
from a chlorine dioxide-containing fraction of the third gas stream and further added gaseous compounds
and repetition or continuation of the above process steps (b) and (c) so that further amounts of chlorine dioxide are dissolved in the aqueous phase,
where
the production of a first aqueous solution comprising dissolved chlorine dioxide and further dissolved constituents in step (a) is carried out by a process selected from the group consisting of:
- acid-chlorite process,
- hydrochloric acid-chlorite process,
- acid-hypochlorite-chlorite process,
- peroxodisulfate-chlorite process,
- peroxodisulfate-peroxomonosulfate-chlorite process,
- chloride electrolysis process,
- chlorite electrolysis process
and where
the first aqueous solution in step (b) has a temperature T₁ and the aqueous phase in step (c) has a temperature T₂, where T₂ is less than T₁.

2. Process according to Claim 1, wherein
one, two or more of the further dissolved constituents of the first aqueous solution produced in step (a) are selected from the group consisting of acids and acid anhydrides, compounds containing peroxo groups and chlorine-containing compounds,
where the compounds containing peroxo groups are preferably selected from the group consisting of
peroxodisulfate, preferably sodium peroxodisulfate,
and
peroxomonosulfate, preferably potassium peroxomonosulfate,
and/or
where the chlorine-containing compounds are preferably selected from the group consisting of
molecular chlorine, chloride, hypochlorite, chlorite and chlorate
and/or
where the acids and acid anhydrides are preferably selected from the group consisting of
mineral acids, preferably selected from the group consisting of sulfuric acid, hydrochloric acid, phosphoric acid and nitric acid
and
organic acids and organic anhydrides, preferably selected from the group consisting of acetic acid, acetic anhydride and propionic acid.

3. Process according to either of the preceding claims, wherein the carrier gas used in step (b)
is inert toward chlorine dioxide
and/or
is selected from the group consisting of air, nitrogen, carbon dioxide, oxygen, noble gases and mixtures thereof
and/or
the first gas stream used in step (b) contains a proportion of chlorine dioxide for at least some of the time, preferably at least after step (d).

4. Process according to any of the preceding claims, wherein
the first gas stream is introduced, preferably introduced finely divided, into the first aqueous solution produced in step (a) in order to carry out step (b), with the first aqueous solution preferably being produced in a first vessel in step (a) and the first gas stream being introduced into the first aqueous solution produced in step (a) in the first vessel in order to carry out step (b),
and/or
the second gas stream resulting from step (b) is introduced, preferably introduced finely divided, into the aqueous phase in order to carry out step (c).

5. Process according to any of the preceding claims, wherein
T₂ is in the range from 0°C to 15°C
and/or
T₁ is in the range from 20 to 40°C
and/or
the difference between T₁ and T₂ is greater than 10 K and is preferably in the range from 10 K to 40 K.

6. Process according to any of the preceding claims, wherein, in step (c), the aqueous phase
is fixed in place, preferably arranged in a fixed position in a stationary vessel
or
is moved, preferably moved as driving medium in a jet pump, preferably in such a way that the second gas stream comes into contact with the moved aqueous phase and is taken up by the moved medium.

7. Process according to any of the preceding claims, wherein, in step (b), chlorine gas is also transferred from the first aqueous solution produced into the first gas stream, so that the second gas stream is also enriched in chlorine gas, with the ratio of the amounts of chlorine gas to chlorine dioxide gas and/or the amount of chlorine gas in the second gas stream preferably being reduced before step (c), preferably by selective chemical reaction of chlorine.

8. Process according to any of the preceding claims, wherein the process
is carried out in a closable apparatus so that no gaseous chlorine dioxide escapes from the apparatus
and/or
is continued at least until
- the ratio of chlorine dioxide concentration in the first aqueous solution to chlorine dioxide concentration in the aqueous solution formed in step (c) has reached a predetermined value
and/or
- the chlorine dioxide concentration or the amount of chlorine dioxide in the aqueous solution formed in step (c) has reached a predetermined value
and/or
wherein the chlorine dioxide concentration in the chlorine-dioxide-containing aqueous solution formed in step (c)
- is in the range from 5 to 20 g/l, preferably in the range from 9 to 20 g/l, particularly preferably in the range from 12 to 20 g/l, very particularly preferably in the range from 15 to 20 g/l,
and/or
- is set so that the corresponding concentration in the gas space at the prevailing temperature in accordance with DIN EN 12671:2016-09 is less than 300 g/m³ and/or less than 10% by volume.

9. Process according to any of the preceding claims, wherein
the first aqueous solution is produced in a first vessel in step (a) and the first gas stream for carrying out step (b) is introduced into the first aqueous solution produced according to step (a) in the first vessel, wherein in the first vessel the desorption of chlorine dioxide is promoted by auxiliaries, preferably desorption-promoting internals in the first vessel and/or a surface area-increasing configuration of the interior wall of the first vessel
and/or
step (c) is carried out in a second vessel, wherein in the second vessel the absorption of chlorine dioxide is promoted by a frit and/or Raschig rings for fine dispersion of gas from the second gas stream and/or the absorption-promoting internals and/or a surface area-increasing configuration of the interior wall of the second vessel and/or further vessel
and/or
the aqueous phase in step (c) is moved as driving medium in a jet pump in such a way that the second gas stream comes into contact with the moved aqueous phase and is taken up by the moved medium.

10. Apparatus for carrying out the process according to any of Claims 1 to 9, comprising
- a first vessel for accommodating a first aqueous solution comprising dissolved chlorine dioxide and further dissolved constituents,
- a first conduit for a first gas stream, with the first conduit being equipped for introducing the first gas stream into a first aqueous solution which has been placed in the first vessel,
- a second vessel for accommodating an aqueous phase,
- a second conduit for a second gas stream, where the second conduit connects the first vessel and the second vessel and is equipped for contacting the second gas stream with the aqueous phase,
- a third conduit for a third gas stream, where the third conduit leads from the second vessel and is connected to the first conduit,
- one or more pump devices for producing the first, second and/or third gas stream,
wherein the apparatus is closable so that chlorine dioxide cannot escape,
wherein
- the first vessel comprises a first aqueous solution comprising dissolved chlorine dioxide and further dissolved constituents
and/or
the second vessel comprises an aqueous solution containing chlorine dioxide.

11. Apparatus according to Claim 10, wherein
- the first vessel comprises an outlet for aqueous solution, with the outlet preferably being closable by means of a valve,
and/or
- the second vessel comprises an outlet for aqueous solution, with the outlet preferably being closable by means of a valve,
and/or
- the first vessel comprises one or more inlets for gaseous and/or liquid substances, with the inlet or inlets preferably being closable by means of respective valves,
and/or
- the pump device or at least one of the plurality of pump devices is selected from the group consisting of gas transport pumps and jet pumps, with the gas transport pump preferably being a compressed air diaphragm pump,
and/or
- the pump device or at least one of the plurality of pump devices is a jet pump which is designed so that during operation the aqueous phase from the second vessel acts as driving medium for the second gas stream and contacts the gases present therein
and/or
- one or more further vessels for accommodating an aqueous phase are provided and further conduits which connect the one or more further vessels to the first vessel and are configured for contacting the second gas stream with an aqueous phase in the further vessel or vessels are provided, with valves preferably being provided in order optionally to convey the second gas stream into the second vessel and/or into the further vessel or vessels and/or the one or more further vessel or vessels preferably each comprising an outlet for aqueous solution, with the outlet preferably being closable by means of a valve
and/or
- the apparatus is configured for producing a gas circuit in which gas is circulated through at least the apparatus elements of first conduit, first vessel, second conduit, second vessel and third conduit,
where the pump device or at least one of the plurality of pump devices is preferably selected from the group consisting of gas transport pumps and jet pumps, and is configured for producing a gas circuit or for contributing to production of a gas circuit in which gas is circulated through at least the apparatus elements of first conduit, first vessel, second conduit, second vessel and third conduit
and/or
- an elimination module for chlorine gas is provided and is integrated into the second conduit and is configured for reducing the ratio of the amounts of chlorine gas to chlorine dioxide gas and/or the amount of chlorine gas in the second gas stream, preferably by selective chemical reaction of chlorine
and/or
- the apparatus further comprises one or more apparatus elements selected from the group consisting of
- auxiliaries for promoting the desorption of chlorine dioxide in the first vessel, preferably desorption-promoting internals in the first vessel and/or a surface area-increasing configuration of the interior wall of the first vessel,
and
- auxiliaries for promoting the absorption of chlorine dioxide in the second vessel and/or a further vessel, preferably a frit and/or Raschig rings for fine dispersion of gas from the second gas stream and/or absorption-promoting internals and/or a surface area-increasing configuration of the interior wall of the second vessel and/or further vessel.

12. Apparatus according to either of claims 10 and 11, wherein
a first temperature control device, preferably a first thermostat, is provided in order to control the temperature of the interior of the first vessel
and/or
a second temperature control device, preferably a second thermostat, is provided in order to control the temperature of the interior of the second vessel,
where the first temperature control device and/or the second temperature control device is preferably configured for setting a prescribed temperature difference between the interior spaces of the first vessel and the second vessel, with the prescribed temperature difference preferably being greater than 10 K and particularly preferably being in the range from 10 K to 40 K.

13. Apparatus according to any of the preceding claims, further comprising one or more apparatus elements selected from the group consisting of
- desorption-promoting internals in the first vessel and/or a surface area-increasing configuration of the interior wall of the first vessel as auxiliaries for promoting desorption of chlorine dioxide in the first vessel,
and
- a frit and/or Raschig rings in the second vessel and/or a further vessel for fine dispersion of gas from the second gas stream and/or chlorine dioxide absorption-promoting internals and/or a surface area-increasing configuration of the interior wall of the second vessel and/or further vessel
and
- a jet pump which is designed so that during operation the aqueous phase from the second vessel acts as driving medium for the second gas stream and contacts the gases present therein.

14. Use of an apparatus according to any of Claims 10 to 13 for carrying out a process according to any of Claims 1 to 9.

15. Process according to any of Claims 1 to 9, wherein the process is carried out in an apparatus according to any of Claims 10 to 13.

## Revendications

1. Procédé de fabrication d'une solution aqueuse contenant du dioxyde de chlore à partir de dioxyde de chlore gazeux et d'une phase aqueuse,
avec les étapes suivantes :
(a) préparation d'une première solution aqueuse comprenant du dioxyde de chlore dissous et d'autres composants dissous,
(b) transfert de dioxyde de chlore dissous de la première solution aqueuse produite dans un premier flux gazeux qui comprend un gaz porteur, résultant en un second flux gazeux qui comprend un gaz porteur et est enrichi en dioxyde de chlore gazeux,
(c) transfert de dioxyde de chlore gazeux du deuxième flux gazeux dans une phase aqueuse, le dioxyde de chlore étant dissous dans la phase aqueuse pour former la solution aqueuse contenant du dioxyde de chlore et un troisième flux gazeux étant formé qui est appauvri en dioxyde de chlore,
(d) préparation de quantités additionnelles du premier flux gazeux
à partir du troisième flux de gaz
ou
à partir d'une partie contenant du dioxyde de chlore du troisième flux gazeux et d'autres composés gazeux ajoutés
les étapes de procédé (b) et (c) ci-dessus étant répétés ou poursuivis de sorte que des quantités additionnelles de dioxyde de chlore soient dissoutes dans la phase aqueuse,
dans lequel
la préparation d'une première solution aqueuse comprenant du dioxyde de chlore dissous et d'autres composants dissous à l'étape (a) est effectuée par un procédé qui est choisi dans le groupe consistant en :
- procédé acide-chlorite,
- procédé acide chlorhydrique-chlorite,
- procédé acide-hypochlorite-chlorite,
- procédé peroxodisulfate-chlorite,
- procédé peroxodisulfate-peroxomonosulfate-chlorite,
- procédé d'électrolyse des chlorures,
- procédé d'électrolyse du chlorite
et dans lequel
la première solution aqueuse à l'étape (b) a une température T₁ et la phase aqueuse à l'étape (c) a une température T₂, où T₂ est inférieur à T₁.

2. Procédé selon la revendication 1, dans lequel
un, deux ou plusieurs des composants dissous additionnels de la première solution aqueuse préparée à l'étape (a) sont choisis dans le groupe constitué d'acides et d'anhydrides d'acide, de composés contenant des groupes peroxo et de composés contenant du chlore,
dans lequel les composés contenant un groupe peroxo sont de préférence choisis dans le groupe consistant en
le peroxodisulfate, de préférence le peroxodisulfate de sodium, et
le peroxomonosulfate, de préférence le peroxomonosulfate de potassium,
et/ou
dans lequel les composés contenant du chlore sont de préférence choisis dans le groupe consistant en
le chlore moléculaire, le chlorure, l'hypochlorite, le chlorite et le chlorate
et/ou
dans lequel les acides et les anhydrides d'acides sont de préférence choisis dans le groupe consistant en
les acides minéraux, de préférence choisis dans le groupe constitué par l'acide sulfurique, l'acide chlorhydrique, l'acide phosphorique et l'acide nitrique
et
o des acides organiques et des anhydrides organiques, de préférence choisis dans le groupe constitué par l'acide acétique, l'anhydride acétique et l'acide propionique.

3. Procédé selon l'une quelconque des revendications précédentes, dans lequel le gaz porteur utilisé à l'étape (b)
est inerte au dioxyde de chlore
et/ou
est choisi dans le groupe comprenant l'air, l'azote, le dioxyde de carbone, l'oxygène, les gaz nobles et leurs mélanges
et/ou
le premier flux gazeux utilisé à l'étape (b) contient une proportion de dioxyde de chlore au moins temporairement, de préférence au moins après l'étape (d).

4. Procédé selon l'une quelconque des revendications précédentes, dans lequel
le premier flux gazeux pour la réalisation de l'étape (b) est introduit dans la première solution aqueuse produite selon l'étape (a), de préférence finement divisée, la première solution aqueuse étant de préférence produite à l'étape (a) dans un premier récipient et le premier flux gazeux pour la réalisation de l'étape (b) étant introduit dans la première solution aqueuse produite selon l'étape (a) dans le premier récipient
et/ou
le deuxième flux gazeux issu de l'étape (b) est introduit dans la phase aqueuse pour la réalisation de l'étape (c), de préférence finement divisée.

5. Procédé selon l'une quelconque des revendications précédentes, dans lequel
T₂ est dans la plage de 0 °C à 15 °C
et/ou
T₁ est dans la plage de 20 à 40 °C
et/ou
la différence entre T₁ et T₂ est supérieure à 10 K et est de préférence comprise entre 10 K et 40 K.

6. Procédé selon l'une quelconque des revendications précédentes, dans lequel à l'étape (c) la phase aqueuse
est stationnaire, de préférence disposée de manière stationnaire dans un récipient stationnaire
ou
est déplacée, de préférence déplacée dans une pompe à jet en tant que milieu d'entraînement, de préférence telle que le deuxième flux gazeux entre en contact avec la phase aqueuse en mouvement et est absorbé par le milieu en mouvement.

7. Procédé selon l'une quelconque des revendications précédentes, dans lequel à l'étape (b) du chlore gazeux est également transféré de la première solution aqueuse produite dans le premier flux gazeux, de sorte que le deuxième flux gazeux est également enrichi en chlore gazeux, le rapport des quantités de chlore gazeux par rapport au dioxyde de chlore gazeux et/ou la quantité de chlore gazeux dans le deuxième flux gazeux étant de préférence réduit avant l'étape (c), de préférence par conversion chimique sélective de chlore.

8. Procédé selon l'une quelconque des revendications précédentes, dans lequel le procédé
est conduit dans un dispositif verrouillable de manière à ce qu'aucun dioxyde de chlore gazeux ne s'échappe du dispositif
et/ou
se poursuit au moins jusqu'à ce que
- le rapport de la concentration en dioxyde de chlore dans la première solution aqueuse à la concentration en dioxyde de chlore dans la solution aqueuse formée à l'étape (c) ait atteint une valeur prédéterminée
et/ou
- la concentration en dioxyde de chlore ou la quantité de dioxyde de chlore dans la solution aqueuse formée à l'étape (c) ait atteint une valeur prédéterminée
et/ou
dans lequel, dans la solution aqueuse contenant du dioxyde de chlore formée à l'étape (c), la concentration en dioxyde de chlore
- est comprise dans la gamme de 5 à 20 g/L, de préférence dans la gamme de 9 à 20 g/L, de manière particulièrement préférée dans la gamme de 12 à 20 g/L, de manière tout particulièrement préférée dans la gamme de 15 à 20 g/L,
et/ou
- est réglé de manière à ce que la concentration correspondante dans l'espace gazeux à la température ambiante selon DIN EN 12671:2016-09 soit inférieure à 300 g/m³ et/ou inférieure à 10 % en volume.

9. Procédé selon l'une quelconque des revendications précédentes, dans lequel
la première solution aqueuse à l'étape (a) est produite dans un premier récipient et le premier flux gazeux pour la réalisation de l'étape (b) est introduit dans la première solution aqueuse produite selon l'étape (a) dans le premier récipient, dans lequel, dans le premier récipient, la désorption du dioxyde de chlore est favorisée par des aides, de préférence par des éléments intégrés dans le premier récipient favorisant la désorption et/ou par une formation agrandissant la surface de la paroi interne du premier récipient
et/ou
l'étape (c) est réalisée dans un deuxième récipient, l'absorption du dioxyde de chlore étant favorisée dans le deuxième récipient par une fritte et/ou par des anneaux de Raschig pour la répartition fine de gaz du deuxième flux gazeux et/ou par des éléments intégrés qui favorisent l'absorption et /ou une formation agrandissant la surface de la paroi intérieure du deuxième et/ou autre récipient
et/ou
la phase aqueuse est déplacée à l'étape (c) dans une pompe à jet en tant que milieu d'entraînement, de sorte que le second flux gazeux entre en contact avec la phase aqueuse en mouvement et est absorbé par le milieu en mouvement.

10. Dispositif pour la mise en oeuvre du procédé selon l'une des revendications 1 à 9, comprenant
- un premier récipient pour recevoir une première solution aqueuse comprenant du dioxyde de chlore dissous et des composants dissous additionnels,
- une première ligne pour un premier flux gazeux, la première ligne étant agencée pour introduire le premier flux gazeux dans une première solution aqueuse remplie dans le premier récipient,
- un deuxième récipient pour contenir une phase aqueuse,
- une deuxième ligne pour un deuxième flux gazeux, la deuxième ligne reliant le premier récipient et le deuxième récipient et étant agencée pour mettre en contact le deuxième flux gazeux avec la phase aqueuse,
- une troisième ligne pour un troisième flux de gaz, la troisième ligne sortant du deuxième récipient et étant reliée à la première ligne,
- un ou plusieurs dispositifs de pompage pour générer les premier, deuxième et/ou troisième flux de gaz,
dans lequel le dispositif peut être fermé de manière à ce que le dioxyde de chlore ne puisse s'échapper,
dans lequel
- le premier récipient comprend une première solution aqueuse comprenant du dioxyde de chlore dissous et des composants dissous additionnels
et/ou
le deuxième récipient comprend une solution aqueuse contenant du dioxyde de chlore.

11. Dispositif selon la revendication 10, dans lequel
- le premier récipient comprend une sortie pour la solution aqueuse, la sortie étant de préférence obturable par une vanne,
et/ou
- le deuxième récipient comprend une sortie pour la solution aqueuse, la sortie étant de préférence obturable par une vanne,
et/ou
- le premier récipient comprend une ou plusieurs entrées pour des substances gazeuses et/ou liquides, la ou les entrées étant de préférence obturable par des vannes,
et/ou
- l'un ou au moins l'un des plusieurs dispositifs de pompage est choisi dans le groupe constitué des pompes d'alimentation en gaz et des pompes à jet, la pompe d'alimentation en gaz étant de préférence une pompe à membrane à air comprimé,
et/ou
- l'un ou au moins l'un des plusieurs dispositifs de pompage est une pompe à jet qui est configurée de telle manière que, pendant le fonctionnement, la phase aqueuse provenant du deuxième récipient entraîne le deuxième flux de gaz en tant que milieu d'entraînement et entre en contact avec les gaz contenus dans celui-ci
et/ou
- un ou plusieurs récipients additionnels sont prévus pour recevoir une phase aqueuse et des lignes additionnelles sont prévues qui relient le ou les récipient(s) additionnel(s) au premier récipient et sont configurés pour mettre en contact le deuxième flux gazeux avec une phase aqueuse dans le ou les récipient(s) additionnel(s), dans lequel des vannes sont de préférence prévues pour diriger sélectivement le deuxième flux de gaz dans le deuxième récipient et/ou dans le ou les récipient(s) additionnel(s), et/ou dans lequel, de préférence, le ou les récipient(s) additionnel(s) comprennent chacun une sortie pour la solution aqueuse, la sortie étant de préférence obturable par une vanne
et/ou
- le dispositif étant agencé pour générer un circuit de gaz dans lequel le gaz est mis en circulation à travers au moins les éléments du dispositif première ligne, premier récipient, deuxième ligne, deuxième récipient et troisième ligne,
dans lequel, de préférence, l'un ou au moins l'un des plusieurs dispositifs de pompe est choisi dans le groupe constitué de pompes d'alimentation en gaz et de pompes à jet, et est configuré pour générer un circuit de gaz ou pour contribuer à la génération d'un circuit de gaz, dans lequel le gaz est mis en circulation à travers au moins les éléments du dispositif première ligne, premier récipient, deuxième ligne, deuxième récipient et troisième ligne,
et/ou
- un module d'élimination du chlore gazeux est prévu, qui est intégré dans la deuxième ligne et est adapté pour réduire le rapport des quantités de chlore gazeux sur le dioxyde de chlore gazeux et/ou la quantité de chlore gazeux dans le deuxième flux gazeux, de préférence par conversion chimique sélective du chlore
et/ou
- le dispositif comprend en outre un ou plusieurs éléments de dispositif choisis dans le groupe constitué de
∘ aides pour favoriser la désorption du dioxyde de chlore dans le premier récipient, de préférence des éléments favorisant la désorption intégrés dans le premier récipient et/ou une formation agrandissant la surface de la paroi intérieure du premier récipient
et
∘ aides pour favoriser l'absorption du dioxyde de chlore dans le deuxième récipient et/ou un récipient additionnel, de préférence une fritte et/ou des anneaux de Raschig pour une répartition fine du gaz du deuxième flux de gaz et/ou des éléments intégrés qui favorisent l'absorption et/ou une formation agrandissant la surface de la paroi intérieure du deuxième récipient et/ou du récipient additionnel.

12. Dispositif selon l'une des revendications 10 et 11, dans lequel
un premier dispositif de contrôle de la température, de préférence un premier thermostat, est prévu afin de contrôler la température de l'intérieur du premier récipient
et/ou
un deuxième dispositif de contrôle de la température, de préférence un deuxième thermostat, est prévu pour contrôler la température de l'intérieur du deuxième récipient,
dans lequel le premier et/ou le deuxième dispositif de contrôle de température sont de préférence configurés pour régler une différence de température prédéterminée entre les espaces intérieurs du premier et du deuxième récipient, la différence de température prédéterminée étant de préférence supérieure à 10 K et de manière particulièrement préférée comprise dans la plage entre 10 K et 40 K.

13. Dispositif selon l'une quelconque des revendications précédentes, comprenant en outre un ou plusieurs éléments de dispositif choisis dans le groupe constitué par
- les éléments intégrés favorisant la désorption dans le premier récipient et/ou une formation agrandissant la surface de la paroi interne du premier récipient comme aide pour favoriser la désorption du dioxyde de chlore dans le premier récipient,
et
- une fritte et/ou des anneaux de Raschig dans le deuxième récipient et/ou dans un récipient additionnel pour la distribution fine du gaz du deuxième flux de gaz et/ou des éléments intégrés favorisant la désorption du dioxyde de chlore et/ou une formation agrandissant la surface de l'intérieur paroi du deuxième récipient et/ou du récipient additionnel,
et
- une pompe à jet qui est agencée de manière à ce que, pendant le fonctionnement, la phase aqueuse issue du deuxième récipient entraîne le deuxième flux gazeux comme milieu d'entraînement et entre en contact avec les gaz contenus dans celui-ci.

14. Utilisation d'un dispositif selon l'une des revendications 10 à 13 pour la mise en oeuvre d'un procédé selon l'une des revendications 1 à 9.

15. Procédé selon l'une des revendications 1 à 9, le procédé étant mis en oeuvre dans un dispositif selon l'une quelconque des revendications 10 à 13.
